# EUROPÄISCHE PATENTSCHRIFT

(11) **EP 2 652 482 B1**
(45) Veröffentlichungstag und Bekanntmachung des Hinweises auf die Patenterteilung: **27.11.2019**
(21) Anmeldenummer: 11807668.6
(22) Anmeldetag: 16.12.2011
(51) Int. Cl.: G01N 21/47, G01N 21/64, G01N 21/17

(54) **TECHNIK ZUR TOMOGRAPHISCHEN BILDERFASSUNG**
TECHNIQUE FOR TOMOGRAPHIC IMAGING
TECHNIQUE D'IMAGERIE TOMOGRAPHIQUE

(30) Priorität: 17.12.2010 DE 102010063412
(43) Veröffentlichungstag der Anmeldung: 23.10.2013
(73) Patentinhaber: Laser Zentrum Hannover e.V., 30419 Hannover (DE)
(72) Erfinder: LORBEER, Raoul-Amadeus, 71106 Magstadt (DE); MEYER, Heiko, 30916 Isernhagen (DE); HEIDRICH, Marko, 72070 Tübingen (DE); HEISTERKAMP, Alexander, 30916 Isernhagen (DE)
(74) Vertreter: Wichmann, Hendrik
(86) Internationale Anmeldenummer: PCT/EP2011/073077
(87) Internationale Veröffentlichungsnummer: WO 2012/080478

(56) Entgegenhaltungen:
- WO-A1-2004/020997
- US-A1- 2008 277 567
- H. MEYER: "A multiprojection noncontact fluorescence tomography setup for imaging arbitrary geometries", PROCEEDINGS OF SPIE, Bd. 5693, 1. Januar 2005 (2005-01-01), Seiten 246-254, XP55026016, ISSN: 0277-786X, DOI: 10.1117/12.590837
- RAOUL-AMADEUS LORBEER ET AL: "Highly efficient 3D fluorescence microscopy with a scanning laser optical tomograph", OPTICS EXPRESS, Bd. 19, Nr. 6, 14. März 2011 (2011-03-14), Seiten 5419-5430, XP55025791, ISSN: 1094-4087, DOI: 10.1364/OE.19.005419
- MARKO HEIDRICH ET AL: "3D imaging of biofilms on implants by detection of scattered light with a scanning laser optical tomograph", BIOMEDICAL OPTICS EXPRESS, Bd. 2, Nr. 11, 1. November 2011 (2011-11-01), Seiten 2982-2994, XP55025923, ISSN: 2156-7085, DOI: 10.1364/BOE.2.002982

## Beschreibung

### Technisches Gebiet

Die Erfindung betrifft allgemein eine Technik zur Erfassung eines Schnittbilds oder eines dreidimensionalen Bilds. Insbesondere betrifft die Erfindung eine Vorrichtung zur tomographischen Bilderfassung eines räumlichen Objekts.

### Technischer Hintergrund

Auflösung und Kontrast bestehender Techniken zur räumlichen Bilderfassung, insbesondere zur Mikroskopie lebender Organismen, wurden in jüngster Zeit wesentlich verbessert. Verbreitete Techniken mit hoher Auflösung, wie die in der Druckschrift DE 43 26 473 beschriebene Konfokalmikroskopie, basieren auf der ortsaufgelösten Erfassung eines Überlapps von Beleuchtungsvolumen und Erfassungsvolumen. Das Volumen des Überlapps bestimmt die Auflösung. Alternative Verfahren, wie die optische Kohärenzmikroskopie ("Optical Coherence Microscopy", OCM) und die optische Kohärenztomographie ("Optical Coherence Tomography", OCT), bestimmen mittels Licht geringer Kohärenzlänge die axiale Tiefe interferometrisch. Jüngere Techniken, wie die in Science 296, 541 (2002) von J. Sharpe et al. beschriebene optische Projektionstomographie ("Optical Projection Tomography", OPT), durchstrahlen das Probenvolumen unter einer Vielzahl verschiedener Winkel und erreichen eine abhängige Auflösung von 1 bis 5 µm.

Das Dokument WO 2004/020997 A1 beschreibt eine Vorrichtung mit einem drehbaren Objekttisch zur Drehung der abzubildenden Probe. Ein Hauptdetektor erfasst nur Licht, das die Probe parallel zur Lichteinfallsrichtung verlässt. In weiteren Ausführungsformen sind ein Hauptdetektor und eine Vielzahl Hilfsdetektoren in einer ein- oder zwei-dimensionalen Matrix in Strahlrichtung hinter der Probe angeordnet zur winkelaufgelösten Lichterfassung, wobei von der Probe abgelenktes Licht von den Hilfsdetektoren erfasst wird.

Das Dokument US 2008/0277567 A1 beschreibt eine Vorrichtung zum rasternden Erfassen einer optischen Eigenschaft einer Probe. Mittels zweier drehbarer Planspiegel und zweier Parabolspiegel wird ein Laserstrahl stets parallel zur optischen Achse auf die Probe gerichtet. Eine zwei-dimensionale Projektion wird bei jeweils einem Scanvorgang erhalten. Die zwei-dimensionalen Projektionen mehrerer Scanvorgänge werden durch Computertomographie zu einem drei-dimensionalen Bild zusammengesetzt.

Das Dokument US 2007/0109633 A1 beschreibt ein Mikroskop, das eine Ebene im Probenvolumen mit einem Satz paralleler Lichtstrahlen durchleuchtet. Die so gebildete Beleuchtungsebene wird unter einem rechten Winkel zur Beleuchtungsebene in ihren zwei Dimensionen von einer CCD-Kamera ortsaufgelöst erfasst. In einer weiteren Ausführungsform werden zwei Beleuchtungsebenen eingestrahlt. Durch Überlagerung zweier kohärenter Beleuchtungsebenen wird die Intensitätsverteilung in der überlagerten Beleuchtungsebene durch Interferenzmuster strukturiert zur Verbesserung der Ortsauflösung in der Beleuchtungsebene. Zur räumlichen Bilderfassung werden Beleuchtungsebene und Probe zueinander bewegt. Eine weitere Ausführungsform beleuchtet die Probe im Wesentlichen eindimensional und erfasst die Probe in dieser Dimension ortsaufgelöst mit einer linear erhöhten Anzahl an Bildpunkten.

Das Dokument US 2007/0274580 A1 beschreibt eine Technik zur optischen Tomographie. Fluoreszierende Proteine in einer Probe werden durch eingestrahltes Licht angeregt. Das Anregungslicht in der Probe und das Fluoreszenzlicht sind diffus. Ein ortsaufgelöstes Bild wird erfasst und verarbeitet.

Die Wissenschaftspublikation "Forward and Inverse Calculations for 3-D Frequency-Domain Diffuse Optical Tomography", B. W. Pogue et al., SPIE Vol. 2389, Seiten 328-339 beschreibt ein Verfahren der Diffusiven Optischen Tomographie (DOT). Für eine Simulation des Verfahrens wird angenommen, dass eine Vielzahl an Detektoren um ein Objekt auf einem Kreis angeordnet ist.

Die bekannten Techniken zur räumlichen Bilderfassung können aufgrund einer auf die Probe einwirkenden Strahlungsintensität die Bilderfassung verfälschen, die Probe unkontrolliert verändern oder, insbesondere bei *in vivo* Mikroskopie, die Probe zerstören. Auch kann der technische Aufwand, um mit den bisherigen Techniken die Strahlungsintensität bei vergleichbaren Bildresultaten zu verringern, erheblich ansteigen.

### Abriss der Erfindung

Der Erfindung liegt die Aufgabe zugrunde, eine verbesserte Vorrichtung zur tomographischen Bilderfassung bereitzustellen.

Die Aufgabe ist durch eine Vorrichtung zur tomographischen Bilderfassung mit den Merkmalen des Patentanspruchs 1 gelöst.

Die erfindungsgemäße Vorrichtung zur tomographischen Bilderfassung umfasst:
- eine Probenhalterung,
- eine Lichtquelle, die zur Erzeugung eines die Probenhalterung durchquerenden Nadelstrahls mit einer Strahlrichtung ausgebildet ist, und die ein optisches Stellglied aufweist, das den die Probenhalterung durchquerenden Nadelstrahl quer zur Strahlrichtung zu versetzten vermag bei im Wesentlichen unveränderter Strahlrichtung, und
- eine Detektoreinheit, die zur nicht-ortsaufgelösten Erfassung zumindest eines Anteils einer von einem Abschnitt des Nadelstrahls innerhalb der Probenhalterung entweichenden Streustrahlung ausgebildet ist.

Die Probenhalterung sieht zur Aufnahme einer Probe ein Probenvolumen vor.

Der Nadelstrahl kann die Probenhaltung, das Probenvolumen und/oder die Probe durchqueren.

Die Vorrichtung kann die aufgrund eines einzelnen Nadelstrahls (quer zur Strahlrichtung) entweichende Streustrahlung erfassen. Gegenüber herkömmlichen Techniken ist so ein erheblich größerer Anteil der Streustrahlung durch die Detektoreinheit erfassbar. Dementsprechend kann das Signal-Rausch-Verhältnis der Erfassung signifikant verbessert werden. Auch kann eine durch den Nadelstrahl eingebrachte Strahlungsintensität (bei gleicher oder verbesserter Bildqualität) verringert werden. Zudem kann eine Signalvermischung von zueinander (parallel) versetzten Nadelstrahlen (d.h. verschiedenen Messstellungen) ausgeschlossen werden. Auch kann das Probenvolumen mit einer einheitlichen Empfindlichkeit erfasst werden, soweit dieselbe Detektoreinheit alle Messstellungen erfasst. Insbesondere können Ringartefakte (wie sie häufig bei der tomographischen Rekonstruktion einer ortsaufgelösten Erfassung entstehen) vermieden werden. Gegenüber der ortsaufgelösten Erfassung herkömmlicher Techniken kann die Erfassung durch die Detektoreinheit als "null-dimensional" angesehen werden. Ferner kann eine (im Effekt) homogenere Ausleuchtung des Probenvolumens, insbesondere quer zur Strahlrichtung, gegenüber einer simultanen Ausleuchtung (die etwa einen Diffusor einsetzt) erreicht werden. Vorteilhafterweise umfasst die Lichtquelle für eine möglichst homogene Anregung der Streustrahlung einen (über eine Bilderfassungszeit) stabilen Laser als Strahlungsquelle.

Allgemein kann die Strahlungsquelle im Wesentlichen räumlich kohärent, insbesondere punktförmig sein. Eine bevorzugte Strahlungsquelle ist ein Laser. Beispielsweise kann die Strahlungsquelle eine Fluoreszenzlichtquelle sein, vorzugsweise eine Superlumineszenz-Diode (SLD) mit kleiner Austrittsöffnung. Ein Durchmesser der Austrittsöffnung kann so klein bestimmt sein, dass die Austrittsöffnung zumindest im Wesentlichen beugungsbegrenzt ist. Vorzugsweise entspricht der Durchmesser der Austrittsöffnung (höchstens) einem Zweifachen der Beugungsbegrenzung.

"streustrahlung" umfasst jede durch (elektromagnetische, quantenphysikalische oder thermische) Wechselwirkung des Nadelstrahls mit einer in der Probenhalterung aufgenommenen Probe (insbesondere mit deren Pigmenten, Streuzentren, Molekülen oder Atomen) bewirkte Strahlung. Insbesondere umfasst Streustrahlung durch Fluoreszenz, Raman-Streuung, Rayleigh-Streuung und Mie-Streuung bewirkte Strahlung. Ferner kann die Streustrahlung durch eine von der Strahlrichtung des Nadelstrahls abweichende Streurichtung, eine Streustrahlungscharakteristik (gemäß einem differentiellen Streuquerschnitt) oder einer vom Nadelstrahl verschiedenen Wellenlänge bestimmt sein.

Vom Nadelstrahl "entweichende Streustrahlung" kann (ausschließlich) aus der Strahlrichtung herausgestreute Streustrahlung umfassen. Durch ein dichroitisches Filter kann im Fall von Fluoreszenzstrahlung auch Streustrahlung in Strahlrichtung erfasst werden.

Im Fall der Fluoreszenzstrahlung als Streustrahlung umfasst "nicht-resonante Fluoreszenz" den Fall einer gegenüber der Anregungswellenlänge (des zur Anregung eingestrahlten Nadelstrahls) größeren Fluoreszenzwellenlänge (der als Streustrahlung emittierten Fluoreszenzstrahlung).

Die nicht-ortsaufgelöste Erfassung kann in Strahlrichtung nicht-ortsaufgelöst sein. Die nicht-ortsaufgelöste Erfassung kann ferner nicht-richtungsaufgelöst sein. Vorzugsweise ist die nicht-richtungsaufgelöste Erfassung bezüglich einer Probenaustrittsrichtung nicht-richtungsaufgelöst.

Die Probenhalterung kann zumindest in einem (auch als "Fenster" bezeichneten) Abschnitt der Probenhalterung strahltransparent sein.

Die Bilderfassung kann (durch Drehung um die Drehachse) bei verschiedenen Drehstellungen (d.h. verschiedenen Einfallsrichtungen) des Nadelstrahls (relativ zur Probenhalterung) wiederholt werden. Bei geringerer Komplexität (eines darzustellenden Probenobjekts) kann eine Anzahl der verschiedenen Drehstellungen geringer sein. So können bei einem (höchstens) zweidimensionalem Probenobjekt zwei verschiedene Drehstellungen erfasst werden (und ein Probenbild durch Triangulation rekonstruiert werden). Die Drehachse kann durch die Probenhalterung verlaufen. Dies schließt den Fall ein, dass nur eine gedachte geradlinige Verlängerung einer strukturellen Drehachse durch die Probenhalterung verläuft.

Die Lichtquelle kann stationär sein und die Probenhalterung kann um die Drehachse drehbar sein. Alternativ kann die Probenhalterung stationär und die Lichtquelle um die Drehachse drehbar sein.

Der Nadelstrahl kann innerhalb der Probenhalterung eine definierte Strahlbreite aufweisen. Der Nadelstrahl kann innerhalb der Probenhalterung im Wesentlichen divergenzfrei sein. Der Nadelstrahl kann eine Strahltaille innerhalb der Probenhalterung aufweisen mit einer Rayleighlänge, die im Wesentlichen gleich oder größer als die (halbe) Länge des erfassten Abschnitts ist.

Die Länge des erfassten Abschnitts kann um ein Vielfaches größer als die Strahlbreite sein. Die Strahlbreite kann um ein Vielfaches kleiner als eine oder alle Innenabmessungen der Probenhalterung quer zur Strahlrichtung sein. Der erfasste Abschnitt kann den gesamten die Probenhalterung durchquerenden Nadelstrahl umfassen.

Die Lichtquelle kann ferner dazu ausgebildet sein, den Nadelstrahl im sichtbaren Spektrum, im ultravioletten Spektrum, oder im infraroten Spektrum zu erzeugen. Allgemein kann der Nadelstrahl im elektromagnetischen Spektrum mit (Vakuum-)Wellenlängen von 300 nm bis 2000 nm liegen. Dieses Spektrum ist zur zerstörungsfreien Bilderfassung einer Probe mit Desoxyribonukleinsäure (DNA) geeignet. Ein bevorzugter Spektralbereich des Nadelstrahls umfasst 323 nm bis 750 nm oder 355 nm bis 850 nm (im Fall von Fluoreszenzstrahlung als Streustrahlung). In Verbindung mit Absorptionstomographie (mittels eines Transmissionsphotodetektors) kann der Nadelstrahl (zusätzlich) Strahlung von 200 nm bis 323 nm (bzw. von 200 nm bis 355 nm) aufweisen. Ferner kann der Nadelstrahl zumindest teilweise im extremultravioletten Spektrum (XUV) oder im fern-infraroten Spektrum (FIR) die Streustrahlung anregen. Im Fall einer wasserfreien Probe kann der Nadelstrahl (zusätzlich) Strahlung im Bereich oberhalb von 2000 nm aufweisen. Zur Multiphotonen-Anregung der Fluoreszenzstrahlung (kurz: "Multiphotonen-Fluoreszenz") kann jede vorstehende Wellenlängenangabe (einer spektralen Bereichsgrenze) mit einem Faktor 2 (im Fall einer Zweiphotonen-Anregung), einem Faktor 3 (im Fall einer Dreiphotonen-Anregung), etc., multipliziert werden. Zur Multiphotonen-Anregung kann die Lichtquelle kurze intensive Pulse aussenden. Ein Femtosekunden-Laser oder ein (gütegeschalteter) Laser mit Pulsdauern von wenigen Pikosekunden kann als Strahlungsquelle zur Multiphotonen-Anregung eingesetzt werden. Die Multiphotonen-Fluoreszenz kann die Erfassung einer größeren Tiefe (in Strahlrichtung) ermöglichen.

Alternativ oder ergänzend kann die Lichtquelle dazu ausgebildet sein, mittels des Nadelstrahls zweite Harmonische (d.h. Frequenzverdoppelung) oder hohe Harmonische, die hier umfassend als "höhere Harmonische" bezeichnet werden, in der Probenhalterung (d.h. in der ggf. eingesetzten Probe) zu erzeugen. Dieser (in der Fachsprache meist als "Higher Harmonic Generation" oder "HHG" bezeichnete) Prozess kann mehrere (zwei, drei oder mehr) Photonen (des Nadelstrahls) zu einem Photon kohärent umsetzen. Die daraus resultierende "Streustrahlung" kann eine (näherungsweise) um ein ganzzahliges Vielfaches höhere Frequenz (und entsprechend kürzere Wellenlänge) als der Nadelstrahl aufweisen. Die Richtung der "Streustrahlung" der HHG kann grundsätzlich in der Strahlrichtung (des Nadelstrahls) oder entgegengesetzt zur Strahlrichtung sein. Die "Streustrahlung" der HHG ist entlang des Abschnitts des Nadelstrahls innerhalb der Probenhalterung (und nicht nur in einem Fokuspunkt) erzeugbar. HHG kann auch ohne Zugabe von sogenannten "Markern" (zur Probe) auftreten. Vorzugsweise ist für die HHG die Lichtquelle zur Erzeugung des Nadelstrahls mit zirkularer Polarisation ausgebildet. Die "Streustrahlung" der HHG kann ferner (sekundäre) Streustrahlung an Streuzentren innerhalb der Probenhalterung (d.h. in der ggf. eingesetzten Probe) erzeugen. Vorteilhafterweise ist durch den zirkular polarisierten Nadelstrahl die (sekundäre) Streustrahlung an Streuzentren unabhängig von einer räumlichen Orientierung der Streuzentren erzeugbar.

Die Detektoreinheit umfasst wenigstens einen Streustrahlungskollektor, der dazu ausgebildet ist oder die zusammen dazu ausgebildet sind, die Streustrahlung in einem Raumwinkel um die Probenhalterung von mindestens 0,12 π sr (oder mindestens π/8 sr), exemplarisch etwa 0,4 π sr, und vorzugsweise mindestens 2π sr, zu erfassen. Der erfasste Raumwinkel von 0,12 π sr kann einer (maximalen) Photoneneffizienz von 3% entsprechen. Ferner kann der erfasste Raumwinkel von 0,12 π sr einer numerischen Apertur von etwa NA=0,5 (unter Verwendung einer Immersionsflüssigkeit) entsprechen. In Luft kann eine numerische Apertur von NA=0,5 einem erfassten Raumwinkel von 0,28 π sr (oder einer maximalen Photoneneffizienz von 7%) entsprechen. Die so innerhalb des Raumwinkels erfasste Streustrahlung kann kohärent oder inkohärent erfasst werden. Vorteilhafterweise ist es (möglich aber) nicht erforderlich, die Streustrahlung kohärent zu erfassen. Insbesondere können Strahlungswege der erfassten Streustrahlung auch unterschiedliche optische Weglängen aufweisen, die um mehr als eine Kohärenzlänge differieren.

Die Detektoreinheit kann ferner als einen Signalgeber einen Halbleiterdetektor und/oder einen Photoelektronenvervielfacher ("Photomultiplier Tube", PMT) umfassen. Der Halbleiterdetektor kann ein Phototransistor oder eine Photodiode sein, vorzugsweise eine Lawinenphotodiode ("Avalanche Photodiode", APD).

Die Probenhalterung kann zur Aufnahme einer flüssigen (viskosen) Probenumgebung ausgebildet sein. Die Probenhalterung und/oder eine flüssige (viskose) Probenumgebung innerhalb der Probenhalterung können einen probenangepassten Brechungsindex aufweisen.

Ein erster Kollimator des Streustrahlungskollektors kann eine stark brechende Linse oder eine Kondensorlinse umfassen, die zur Kollimation der erfassten Streustrahlung ausgebildet ist. Alternativ oder zusätzlich kann der Streustrahlungskollektor als ersten Kollimator einen sich verjüngenden Lichtleiter ("Tapered Light Pipe", TLP) aufweisen, der zur Kollimation der erfassten Streustrahlung ausgebildet ist. Der Lichtleiter kann ein (innenseitig) reflexionsbeschichteter Lichthohlleiter sein. Alternativ kann der Lichtleiter ein Glasvollstab sein, so dass die Streustrahlung durch Totalreflexion (etwa zur den Glasvollstab umgebenden Luft) geleitet wird. Alternativ oder ergänzend kann der Glasvollstab mit einer dichroitischen Schicht bedampft sein. Die dichroitische Schicht kann für steile Einfallswinkel (d.h. kleine Einfallswinkel zur inneren Flächennormalen des Lichthohlleiters) die Streustrahlung reflektieren. Dies kann ermöglichen, dass für steile Winkel Reflexion (an der dichroitischen Schicht) eintritt und für flache Winkel (d.h. für große Einfallswinkel mit der inneren Flächennormalen des Lichthohlleiters) Totalreflexion eintritt.

Die Detektoreinheit kann ferner ein oder mehrere austauschbare Fluoreszenzfilter aufweisen, die für Fluoreszenzstrahlung (als Streustrahlung) im Wesentlichen transparent sind. Das oder die Fluoreszenzfilter können in der Bandbreite des Nadelstrahls im Wesentlichen undurchlässig sein. Das Fluoreszenzfilter kann ein Farbfilter oder ein dichroitischer Filter sein.

Eine Filterwahleinheit kann die mehreren austauschbaren Fluoreszenzfilter umfassen. Die Filterwahleinheit kann dazu ausgebildet sein, die Fluoreszenzfilter wahlweise (einzeln) zwischen dem ersten Kollimator und dem Signalgeber anzuordnen. So kann die Filterwahleinheit eine drehbare Radscheibe umfassen, in der die mehreren Fluoreszenzfilter umlaufend eingefasst sind. Das austauschbare Fluoreszenzfilter kann durch die Drehung wählbar sein. Alternativ kann die Filterwahleinheit ein verschiebbarer Schieber sein, entlang dessen die mehreren Fluoreszenzfilter eingefasst sind. Das austauschbare Fluoreszenzfilter kann durch die Verschiebung wählbar sein.

Die Detektoreinheit kann einen zweiten Kollimator aufweisen, der zwischen dem Fluoreszenzfilter und dem Signalgeber zur Bündelung der erfassten Streustrahlung angeordnet ist.

Die Detektoreinheit kann mehrere Streustrahlungskollektoren umfassen. Die Detektoreinheit kann ferner einen allen Streustrahlungskollektoren zugeordneten Signalgeber oder mehrere jeweils einem der Streustrahlungskollektoren zugeordnete Signalgeber umfassen. Signalausgänge der mehreren Signalgeber können aufaddiert werden. Die Signalausgänge können analog aufaddiert werden, vorzugsweise indem die Signalausgänge zusammengeschaltet sind. Alternativ oder ergänzend können die Signalausgänge digital aufaddiert werden, vorzugsweise indem jeweils ein Analog-Digital-Wandler mit jedem der Signalausgänge verbunden oder verbindbar ist zur getrennten Digitalisierung und eine Recheneinheit mit dem Analog-Digital-Wandler verbunden oder verbindbar ist zur Addition der digitalisierten Signalausgänge.

Der Streustrahlungskollektor kann ferner einen die Probenhalterung zumindest im Wesentlichen umschließenden Integrator aufweisen. Eine (der Probenhalterung zugewandte) Innenfläche des Integrators kann eine diffus reflektierende Innenfläche sein. Die Innenfläche des Integrators kann eine Quaderform, aufweisen. Alternativ kann der Integrator eine Ulbricht-Kugel sein. Eine Linearabmessung des Integrators, vorzugsweise eine Kantenlänge oder ein Durchmesser des Integrators, kann so klein bemessen sein, dass eine der Linearabmessung entsprechende Lichtlaufzeit kürzer als eine Halbwertszeit der durch den Nadelstrahl angeregten Fluoreszenzstrahlung ist. Dabei kann die Linearabmessung ferner mit einer (mittleren) Anzahl an Reflexionen oder Streuungen (innerhalb des Integrators) multipliziert sein. Die Halbwertszeit der Fluoreszenzstrahlung (d.h. eine Fluoreszenzlebenszeit) kann so erfassbar sein, insbesondere wenn die zeitliche Verbreiterung (eines Signals) der Streustrahlung durch unterschiedlich lange Lichtlaufstrecken klein ist im Vergleich zur Halbwertszeit. Der erste Kollimator kann dazu angeordnet sein, Streustrahlung aufzunehmen an einer im Wesentlichen senkrecht zur Strahlrichtung angeordneten Messöffnung im Integrator.

Das optische Stellglied der Lichtquelle kann umfassen:
- wenigstens einen Rasterungsspiegel, und
- einen oder mehrere mit dem wenigstens einen Rasterungsspiegel zur Rasterungsspiegelbewegung gekoppelte Aktuatoren.

Insbesondere kann das optische Stellglied als Relaisoptik ausgebildet sein mit:
- einem von einem ersten Aktuator betätigten ersten Rasterungsspiegel zum Versetzen des Nadelstrahls in einer ersten Rasterungsrichtung,
- einem von einem zweiten Aktuator betätigten zweiten Rasterungsspiegel zum Versetzen des Nadelstrahls in einer zur ersten Rasterungsrichtung im Wesentlichen senkrechten zweiten Rasterungsrichtung, und
- einer Linse, zwei Linsen oder einem Linsensystem (zwischen dem ersten Rasterungsspiegel und dem zweiten Rasterungsspiegel), das dazu ausgebildet ist, den ersten Rasterungsspiegel auf den zweiten Rasterungsspiegel abzubilden.

Das optische Stellglied kann spannungsgesteuert, vorzugsweise piezoelektrisch betätigbar, sein. So kann ein Piezokristall als Aktuator eingesetzt sein. Alternativ kann das optische Stellglied stromgesteuert sein, vorzugsweise mittels eines Drehmagnet-Galvanometers oder eines Drehspul-Galvanometers. So kann ein (auch als Galvo-Scanner bezeichnetes) Galvanometer als Aktuator eingesetzt sein. Alternativ kann das optische Stellglied (für jede der beiden Rasterungsrichtungen) einen Polygon-Scanner aufweisen. Der Polygon-Scanner umfasst ein Spiegelpolygon und einen Motor, auf dessen Achse das Spiegelpolygon rotierbar angeordnet ist. Das Spiegelpolygon ist ein Zylinder mit einem regelmäßigen Polygon als Grundfläche, dessen Seitenflächen verspiegelt sind. Ferner kann das optische Stellglied (für jede der beiden Rasterungsrichtungen oder für eine schelle Rasterungsrichtung) einen akustooptischen Modulator (AOM) aufweisen. Als optisches Stellglied wird der AOM auch als "Acousto Optic Deflector" (AOD) bezeichnet. Der AOM umfasst einen strahltransparenten Festkörper, in dem ein quer zur Strahlrichtung angeordnetes Piezoelement eine laufende Schallwelle mit einer Ultraschallfrequenz zu erzeugen vermag. Zur schnellen Rasterung (d.h. zum Versatz des Nadelstrahls) ist die Ultraschallfrequenz veränderlich.

Der eine oder die mehreren Aktuatoren können dazu ausgebildet sein, den Rasterungsspiegel im Wesentlichen senkrecht zur Strahlrichtung zu bewegen oder um eine zur Strahlrichtung im Wesentlichen senkrechte Schwenkachse zu schwenken. Zum Versetzen des Nadelstrahls in einer ersten Rasterungsrichtung und in einer zur ersten Rasterungsrichtung nicht parallelen zweiten Rasterungsrichtung kann ein erster Aktuator beziehungsweise ein zweiter Aktuator der mehreren Aktuatoren vorgesehen sein. Die erste Rasterungsrichtung ist vorzugsweise (im Wesentlichen) parallel zur Drehachse.

Die Lichtquelle kann ferner eine Strahlungsquelle und eine Strahlformungsoptik aufweisen, die zwischen der Strahlungsquelle und dem optischen Stellglied angeordnet ist. Die Strahlformungsoptik kann eine Teleskopoptik zur Strahlvergrößerung umfassen. Ferner kann die Strahlformungsoptik eine Ringblende und ein Axicon zur Erzeugung eines Besselstrahls als Nadelstrahl umfassen. Alternativ oder ergänzend kann die Strahlformungsoptik eine Spiralphasenplatte ("Spiral Phase Plate" oder "Vortex Phase Plate") zur Erzeugung des Nadelstrahls mit optischem Vortex oder Laguerre-Gauss'scher Mode ("Doughnut Mode") umfassen.

Die Lichtquelle kann ferner eine Fokussieroptik aufweisen, die zwischen dem optischen Stellglied und der Probenhalterung angeordnet ist. Die Fokussieroptik kann eine Fokussierlinse oder ein Fokussierlinsensystem zur Bildung des Nadelstrahlstrahls (mit der definierten Strahlbreite innerhalb der Probenhalterung) umfassen. Vorzugsweise weist die Fokussieroptik eine Teleskopoptik und eine Fokussierlinse auf. Zum Vorteil einer höheren Auflösung kann die Fokussieroptik den Strahl (nach den Rasterungsspiegeln) aufweiten. So kann eine Breite der Rasterungsspiegel kleiner als die Strahlbreite sein. Die Fokussieroptik kann den Nadelstrahl in die Probenhalterung mit einer größeren numerischen Apertur einstrahlen. So ist eine eingestrahlte numerische Apertur von NA_{E}=0,2 erreichbar. (Die eingestrahlte numerische Apertur, NA_{E}, ist nicht mit der erfassten numerischen Apertur, NA, zu verwechseln.) Eine erste Brennebene der Fokussieroptik kann (im Wesentlichen) eine Position des Rasterungsspiegels umfassen. Eine zweite Brennebene der Fokussieroptik kann (im Wesentlichen) eine Position innerhalb der Probenhalterung umfassen, vorzugsweise eine Position der Strahltaille oder der Drehachse innerhalb der Probenhalterung.

Die Vorrichtung kann ferner eine Recheneinheit umfassen, die mit dem Signalgeber der Detektoreinheit verbunden oder verbindbar ist zur Übertragung eines Datensatzes mit Intensitätsdaten vom Signalgeber zur Recheneinheit. Die Intensitätsdaten können Intensitäten der erfassten Streustrahlung repräsentieren. Das optische Stellglied kann dazu ausgebildet sein, (gesteuert durch die Recheneinheit) den Nadelstrahl (schrittweise oder kontinuierlich) in eine Vielzahl verschiedener Messstellungen zu versetzen. Der Datensatz kann ein Rasterdatensatz sein, der Intensitätsdaten zu jeder der Vielzahl Messstellungen umfasst.

Die Vorrichtung kann ferner einen (durch die Recheneinheit gesteuerten) Motor umfassen zur (schrittweisen oder kontinuierlichen) Drehung der Probenhalterung und der Lichtquelle relativ zueinander in eine Vielzahl verschiedener Drehstellungen. Der Datensatz kann ein Tomographiedatensatz sein, der einen Rasterdatensatz zu jeder der Vielzahl Drehstellungen umfasst.

Die Recheneinheit kann ferner dazu ausgebildet sein, auf Grundlage des Tomographiedatensatzes ein Schnittbild oder ein räumliches Bild zu rekonstruieren. Das rekonstruierte Bild kann einen Streukoeffizienten (einer Probe in der Probenhalterung) und/oder (ergänzend) einen Extinktionskoeffizienten (der Probe in der Probenhalterung) repräsentiert. Die Rekonstruktion kann eine inverse Radontransformation umfassen. Alternativ oder zusätzlich kann die Rekonstruktion eine iterative Rekonstruktion umfassen. Die Recheneinheit kann ferner dazu ausgebildet sein, eine Extinktion des Nadelstrahls gemäß dem (integralen) Lambert-Beer'schen Gesetz zu korrigieren oder bei der Rekonstruktion zu berücksichtigen.

Die Aufgabe ist ferner durch ein Verfahren zur tomographischen Bilderfassung mit den Verfahrensschritten des Patentanspruchs 14 gelöst.

### Kurze Beschreibung der Zeichnungen

Weitere Vorteile und Merkmale der Erfindung ergeben sich aus den nachfolgend anhand schematischer Zeichnungen beschriebenen Ausführungsbeispielen. Es zeigen:
- Fig. 1: eine Aufsicht eines ersten Ausführungsbeispiels der Vorrichtung zur tomographischen Bilderfassung mit einem Integrator,
- Fign. 2a und 2b: eine Aufsicht bzw. eine Seitenansicht eines zweiten Ausführungsbeispiels der Vorrichtung zur tomographischen Bilderfassung mit einem reflektierenden Probengefäß,
- Fig. 3: eine Aufsicht eines dritten Ausführungsbeispiels der Vorrichtung zur tomographischen Bilderfassung mit einem Reflektor,
- Fig. 4: eine Aufsicht eines vierten Ausführungsbeispiels der Vorrichtung zur tomographischen Bilderfassung mit mehreren Streustrahlungskollektoren,
- Fig. 5: eine Aufsicht eines fünften Ausführungsbeispiels der Vorrichtung zur tomographischen Bilderfassung mit einer Kollimatorausnehmung, und
- Fig. 6: ein Flussdiagramm eines Verfahrens zur tomographischen Bilderfassung.

### Ausführliche Beschreibung

Bezugszeichen zu verschiedenen Ausführungsbeispielen mit zwei gleichen Endziffern beziehen sich auf gleichartige (und unter den Ausführungsbeispielen austauschbare) Bauelemente.

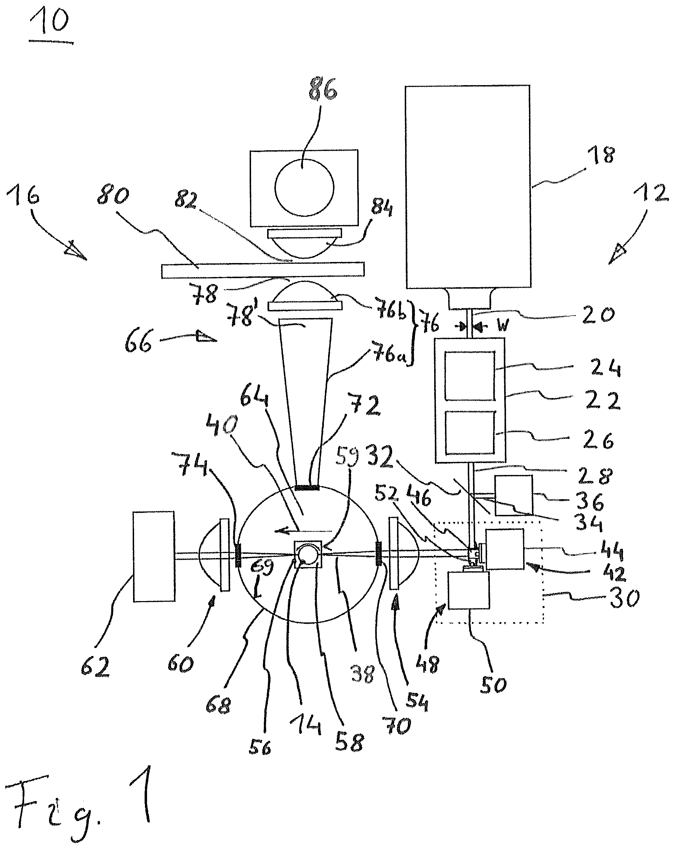

Fig. 1 zeigt eine allgemein mit 10 bezeichnete Vorrichtung zur tomographischen Bilderfassung. Die Vorrichtung 10 umfasst eine Lichtquelle 12, eine Probenhalterung 14 und eine Detektoreinheit 16.

Die Lichtquelle 12 umfasst eine Strahlungsquelle 18, die einen zumindest im Wesentlichen räumlich kohärenten Rohstrahl 20 aussendet. Im gezeigten Ausführungsbeispiel ist die Strahlungsquelle 18 ein Laser. Falls eine Strahlweite w des von der Strahlungsquelle 18 bereitgestellten Rohstrahls 20 zu gering ist, umfasst eine Strahlformungsoptik 22 eine Teleskopoptik 24, die den Rohstrahl 20 aufweitet.

Unabhängig von der eingesetzten Strahlungsquelle 18 umfasst die Strahlformungsoptik 22 unterschiedliche Blenden und Phasenmasken 26, die den Rohstrahl 20 zu einem Formstrahl 28 verändern. Die Strahlformungsoptik 22 ermöglicht Bildgebungseigenschaften der Vorrichtung 10 zu variieren. So kann eine mit der Vorrichtung 10 erreichte Auflösung erhöht oder stufenlos angepasst werden, insbesondere unter Berücksichtigung einer probenabhängigen maximalen Strahlintensität. Darüber hinaus bilden die Blenden oder Phasenmasken 26 den Formstrahl 28 auf ein im Strahlengang nachgeordnetes optisches Stellglied 30 der Lichtquelle 12 ab.

Optional kann zwischen der Strahlformungsoptik 22 und dem optischen Stellglied 30 ein Strahlteiler 32 eingebaut sein, der einen Teilstrahl 34 aus dem Formstrahl 28 in einen Referenzdetektor 36 abzweigt. Im gezeigten Ausführungsbeispiel ist eine Photodiode als Referenzdetektor 36 eingesetzt. Der Referenzdetektor 36 überwacht einerseits die Laserstabilität der Strahlungsquelle 18. Andererseits fungiert der Referenzdetektor 36 (als Signalgeber eines nicht gezeigten Steuerkreislaufs) zur gezielten Intensitätsmodulation der Strahlungsquelle 18. Bei der Intensitätsmodulation wird grundsätzlich von einer erhöhten Intensität zur Probenbeleuchtung ausgegangen. Ein detektorseitiger Dynamikbereich (eines jeden der nachfolgend beschriebenen Detektoren, insbesondere der Detektoreinheit 16) ist ausgeschöpft, falls die Strahlungsquelle 18 eine detektorseitige Übersteuerung oder Signalsättigung hervorruft. Die Intensität der Strahlungsquelle 18 wird für einzelne Teilerfassungen (idealerweise für jede der nachstehend beschriebenen Messstellungen des optischen Stellglieds 30) gezielt soweit reduziert bis keine detektorseitige Übersteuerung vorliegt. Durch die Intensitätsmodulation multiplizieren sich ein (durch die Strahlungsquelle 18 und den Referenzdetektor 36 bestimmter) erzeugungsseitiger Dynamikbereich mit dem detektorseitigen Dynamikbereich zu einem (erweiterten und rauschärmeren) Erfassungsdynamikbereich.

Das optische Stellglied 30 ermöglicht den Verlauf eines Nadelstrahls 38 durch die Probenhalterung 14 im Wesentlichen parallel zur Strahlrichtung 40 zu versetzen. Eine (transversale) Messstellung des optischen Stellglieds 30 wird in einem rechtwinkligen Koordinatensystem quer (oder senkrecht) zur Strahlrichtung 40 durch einen x-Versatz und einen y-Versatz beschrieben. In einer vereinfachten Ausführung umfasst das optische Stellglied 30 nur ein x-Stellglied 42 mit einem x-Aktuator 44, der einen x-Rasterungsspiegel 46 verkippt. Eine x-Schwenkachse der x-Verkippung entspricht der y-Achse des transversalen Koordinatensystems (und steht somit senkrecht zur Strahlrichtung 40). Im gezeigten Ausführungsbeispiel umfasst das optische Stellglied 30 ferner ein y-Stellglied 48 mit einem y-Aktuator 50, der einen y-Rasterungsspiegel 52 um eine (der x-Achse des transversalen Koordinatensystems entsprechende) y-Schwenkachse verkippt. In einer (nicht gezeigten) alternativen Ausführung des optischen Stellglieds 30 wird ein einziger Rasterungsspiegel durch den x-Aktuator 44 und den y-Aktuator 50 um die x-Schwenkachse beziehungsweise die y-Schwenkachse verkippt. Als Aktuatoren 44, 50 sind (auch als "Galvos" oder "Galvo-Scanner" bezeichnete) Galvanometer verwendet. Die Aktuatoren 44 und 50 umfassen jeweils eine Regelung, die eine Spiegeldrehstellung der Rasterungsspiegel 46 bzw. 52 erfasst und einen Strom zum Erreichen des gewünschten Versatzes regelt.

Das optische Stellglied 30, genauer der im Strahlverlauf letzte der beiden Rasterungsspiegel 46, 52, befindet sich in einer hinteren ersten Brennebene einer Fokussieroptik 54 der Lichtquelle 12. Das optische Stellglied 30 deflektiert (durch Reflexion) den Strahlverlauf um eine optische Achse der Fokussieroptik 54 herum. Die Fokussieroptik 54 ist dazu ausgebildet, den Nadelstrahl 38 in die Probenhalterung 14 abzubilden mit einer Strahltaille im Zentrum eines Abschnitts des Nadelstrahls 38 innerhalb der Probenhalterung (entsprechend einer zweiten Brennebene der Fokussieroptik 54). Durch Deflexion (mittels des im Strahlverlauf letzten Rasterungsspiegels 52) in der ersten Brennebene der Fokussieroptik 54 wird eine telezentrische Abbildung des Nadelstrahls 38 (in die Probenhalterung 14) erreicht. Diese erlaubt einen parallelen Versatz auch für große Deflexionswinkel (entsprechend einem doppelten Verkippwinkel der Rasterungsspiegel 46, 52). Abweichungen von einem (zur Strahlrichtung 40) parallelen Strahlversatz könnten eine spätere Bildrekonstruktion erschweren. Der parallele Versatz des Nadelstrahls ermöglicht eine schnelle (tomographische) Bildrekonstruktion durch Inversion einer Radon-Transformation. Alternativ zum Verkippen des wenigstens einen Rasterungsspiegels 46, 52 kann die Lichtquelle (bezüglich der Probenhalterung 14) verschoben werden.

In einer nicht gezeigten Ausführung der Lichtquelle 12 ohne telezentrische Anordnung (des optischen Stellglieds 30 und der Fokussieroptik 54) ist ebenfalls eine tomographische Bilderfassung erreichbar. Dabei erhält der vom optischen Stellglied 30 bewirkte Versatz des Nadelstrahls 38 die Strahlrichtung 40 zumindest insoweit, als der (transversale) Versatz (in der Probenhalterung 14) klein ist im Vergleich zur (optischen) Weglänge zwischen optischem Stellglied 30 und Probenhalterung 14. Mit anderen Worten: Die Parallelität des Nadelstrahlversatzes in der Probenhalterung ist (näherungsweise) gegeben für kleine Verkippwinkel des optischen Stellglieds 30. Ferner ist auch bei größerer Auffächerung des Nadelstrahls 38 (am Ort der Probenhalterung um die ideale Strahlrichtung 40 herum bei verschiedenen Messstellungen) durch angepasste direkte oder iterative Verfahren ein (tomographisches) Bild rekonstruierbar.

Eine erste (nicht gezeigte) Ausführung der Probenhalterung 14 ist dazu ausgebildet, eine Probe direkt zu positionieren. Dazu kann die Probenhalterung 14 eine Klammerung für die Probe, eine Spannschraube zum Einspannen der Probe, oder eine Klebefläche zum Anheften der Probe aufweisen. So können große Proben (langsam) gedreht werden. Eine zweite (nicht gezeigte) Ausführung der Probenhalterung 14 ist zur Positionierung eines Gelvolumens ausgebildet (vorzugsweise ein Agarosegel). Die Probe kann im Gelvolumen (durch Eingießen und Gelbildung) eingeschlossen werden. Die gezeigte dritte Ausführung der Probenhalterung 14 umfasst ein mit einer brechungsindex-angepassten Flüssigkeit gefülltes Glasröhrchen, in das die Probe eingezogen werden kann. Grundsätzlich kann ein Brechungsindex der Probe, alternativ oder ergänzend zu einer (jeden hierin beschriebenen) Anpassung des Brechungsindex der Probenumgebung, angepasst werden. Für Techniken zur Anpassung des Brechungsindex der Probe wird auf die Druckschrift EP 1520173 B1 (und insbesondere die Absätze [0013]ff darin) verwiesen.

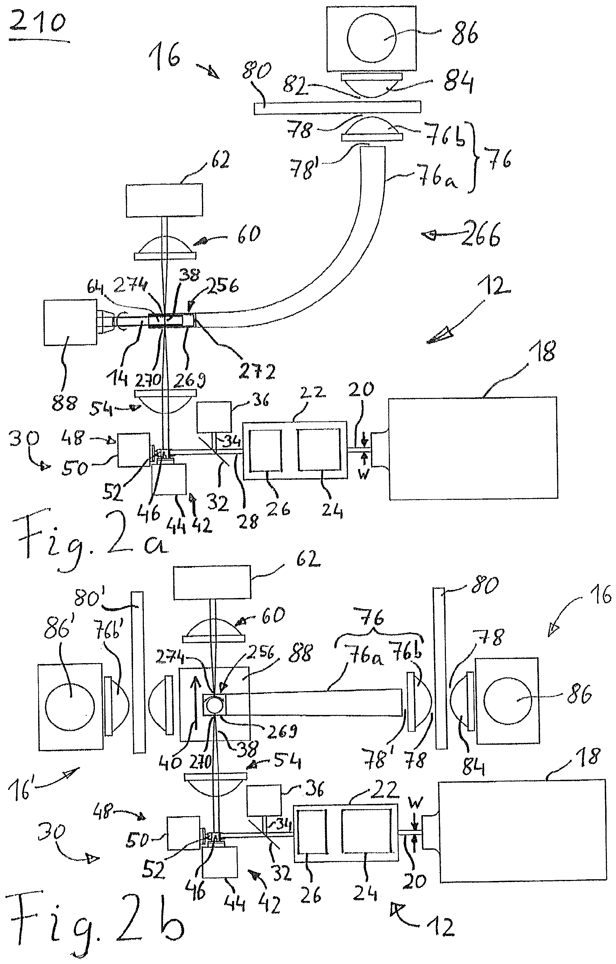

Die Probenhalterung 14 ist in einem Probengefäß 56, vorzugsweise einer Küvette, drehbar angeordnet. Eine im Brechungsindex an die Probe angepasste Flüssigkeit (die im Fall der dritten Ausführung des Probengefäßes 14 zumindest hinsichtlich ihres Brechungsindex mit der vorgenannten Flüssigkeit übereinstimmt) befindet sich zwischen Probenhalterung 14 und Probengefäß 56. Die Drehung betrifft eine relative Drehung zwischen, einerseits, Probenhalterung 14 und, andererseits, zumindest der Lichtquelle 12 und dem Probengefäß 56. Grundsätzlich verläuft eine "Grenze" oder "Schnittstelle" der Drehung zwischen der Probenhalterung 14 und dem Probengefäß 56 (insbesondere da das Probengefäß 56 nachstehend beschriebene Ein- und Austrittsfenster für den Nadelstrahl 38 aufweisen kann, deren Lage zur vereinfachten Rekonstruktion nicht gegenüber dem Nadelstrahl 38 gedreht werden sollte). Eine Drehachse der Drehung ist vertikal (senkrecht zur Zeichnungsebene der Fig. 1, entsprechend der y-Richtung). Die (gedachte) Drehachse der Drehung verläuft durch die Probenhalterung 14. Im in Fig. 1 gezeigten Ausführungsbeispiel ist die Probenhalterung 14 zylindrisch und die Drehachse fällt mit der Zylinderachse zusammen. In einer ersten Variante ist ein elektrischer Antrieb, vorzugsweise ein Schrittmotor (entsprechend dem im Ausführungsbeispiel der Fig. 2 mit 88 bezeichneten Schrittmotor), zur Drehung der Probenhalterung 14 vorgesehen. Lichtquelle 12 und Detektoreinheit 16 sind stationär. In einer zweiten Variante ist der elektrische Antrieb zur Drehung aller anderen Bauelemente der Vorrichtung 10 gegenüber der unbewegten Probenhalterung 14 ausgebildet.

Insbesondere für eine mobile Vorrichtung 10 sind alle Bauelemente außer den Rasterungsspiegel 46, 52 und der Probenhalterung 14 miteinander starr verbunden. Ferner kann in der zweiten Variante einer ortsfeste oder unbewegliche Probe untersucht werden, etwa eine angewachsene Pflanze, wobei sich das Probengefäß 56 und die gesamte Lichtquelle 12 um die Probe dreht. Dabei kann zur Untersuchung größerer Proben auf das Probengefäß 56 (und bei ortsfesten Proben sogar auf die Probenhalterung 14) verzichtet werden.

Mit der Vorrichtung 10 kann auch eine intransparente Probe tomographisch erfasst werden. Das ortsunaufgelöst erfasste Streulicht kann dabei im Wesentlichen an der Oberfläche der intransparente Probe reflektiert oder durch jeden anderen Effekt gestreut werden. Die intransparente Probe kann eine tomographisch erfassbare Oberflächenstruktur haben. Beispielsweise kann die Probenoberfläche eine zumindest teiltransparente Beschichtung aufweisen. Das Streulicht kann Streuanteile und Reflektionsanteile umfassen. Der Streuanteil kann durch Streuung des Nadelstrahls in der Beschichtung bewirkt sein. Der Reflektionsanteil kann durch Reflektion des Nadelstrahls oder des vorwärtsgestreuten Nadelstrahls an der Oberfläche der intransparenten Probe bewirkt sein. Eine Schraube ist ein Beispiel für die intransparente Probe.

Zur räumlichen Positionierung der Probe ist, in einer weiteren ersten Variante oder der vorgenannten ersten Variante, die Probenhalterung 14 (und synchron hierzu das Probengefäß 56) mittels eines Mikrometer-Verfahrtisches in allen drei Richtungen (d.h. in x-Richtung, y-Richtung und Strahlrichtung 40) verfahrbar. In einer weiteren zweiten Variante oder der vorgenannten zweiten Variante ist die Probenhalterung 14 (und das Probengefäß 56) stationär, und die Lichtquelle 12 und die Detektoreinheit 16 (oder alle anderen Bauelemente außer der Probenhalterung 14 und dem Probengefäß 56) sind in allen drei Richtungen verfahrbar. In einem vereinfachten Ausführungsbeispiel (der ersten Variante oder der zweiten Variante) ist die Verfahrbarkeit auf die vertikale Richtung (d.h. die y-Richtung) beschränkt.

Eine Verkippung der Drehachse liegt vor, falls
(A) die Drehachse nicht senkrecht zur Strahlrichtung 40 steht, oder
(B) die Drehachse nicht senkrecht zur x-Richtung des optischen Stellglieds 30 steht.

Im Allgemeinen liegt die Verkippung der Fälle (A) und (B) kombiniert vor. Mit anderen Worten: Eine Verkippung liegt vor, wenn die Drehachse nicht räumlich parallel zur y-Achse ist.

Die Verkippung kann die spätere Bildrekonstruktion erschweren oder Verkippungsartefakte im rekonstruierten Bild verursachen. Zur Justage der Vorrichtung 10, insbesondere zur Kompensation der Verkippung, sind Verstellmechanismen vorgesehen, die ein Schwenken der Drehachse (und damit auch der Probenhalterung 14) relativ zur Strahlrichtung 40 ermöglichen. Ziel der Verstellmechanismen ist, die Drehachse parallel zur y-Achse als Raumrichtung auszurichten.

Hinsichtlich der Verkippung des Falls (A) sind das optische Stellglied 30 und die Fokussieroptik 54 relativ zueinander verschiebbar durch einen ersten Verstellmechanismus. So kann die Fokussieroptik 54 senkrecht zur optischen Achse der Fokussieroptik 54 verschoben werden. Alternativ kann das optische Stellglied 30 senkrecht zur optischen Achse der Fokussieroptik 54 verschoben werden. (Grundsätzlich ist es auch möglich, die gesamte Lichtquelle bis auf die Fokussieroptik 54 zu verschieben.) Durch die Verschiebung in y-Richtung ist ein bezüglich der y-Richtung ansteigender oder abfallender Verlauf des Nadelstrahls einstellbar. So ist ein rechter Winkel zwischen Drehachse und Strahlrichtung 40 einstellbar (in der von der Strahlrichtung 40 und der y-Richtung aufgespannten Ebene). Alternativ oder ergänzend zur Verschiebung ermöglicht der erste Verstellmechanismus, die Drehachse um die x-Achse zu schwenken. Auch damit ist (in der von der Strahlrichtung 40 und der y-Richtung aufgespannten Ebene) ein senkrechter Verlauf des Nadelstrahls zur Drehachse einstellbar.

Hinsichtlich der Verkippung des Falls (B) ermöglicht ein zweiter Verstellmechanismus, die Drehachse (und damit auch die Probenhalterung 14) um die optische Achse der Fokussieroptik 54 zu schwenken. Alternativ kann auch das optische Stellglied 30 um die optische Achse der Fokussieroptik 54 geschwenkt werden. Dadurch kann die Drehachse mit der y-Richtung zur Deckung gebracht werden. Ferner ist die Verkippung des Falls (B) (anders als die Verkippung des Falls (A)) auch durch eine numerische Drehung der (bei einer Drehstellung) erfassten Rohdaten in der xy-Ebene kompensierbar).

Indem im optischen Aufbau die Verkippung vermieden wird, kann eine anschließende Rekonstruktion nach Schichten entkoppelt werden. Eine "Schicht" umfasst alle Erfassungen bei Messstellungen mit derselben Stellung in y-Richtung (d.h. in derselben "Höhe"). Die Rekonstruktion der tomographischen Bilderfassung kann für verschiedene Schichten parallelisiert werden. Soweit die Verkippung vorliegt, entstehen Abhängigkeiten (zwischen Erfassungen bei verschiedenen Stellungen in y-Richtung), die einer tomographischen Bildrekonstruktion nicht grundsätzlich entgegenstehen. Jedoch kann die Berücksichtigung der Abhängigkeiten die Komplexität eines Rekonstruktionsalgorithmus erhöhen.

Soweit zwei Rasterungsspiegel 46, 52 im optischen Stellglied 30 eingesetzt werden, kann bei einer einfachen Ausführung (des optischen Stellglieds) das optische Stellglied 30 bezüglich der Fokussieroptik 54 so angeordnet sein, dass die erste Brennebene der Fokussieroptik 54 zwischen den Rasterungsspiegeln 46 und 52 liegt. So kann eine Auffächerung des Nadelstrahls 38 (d.h. eine Abweichung von einer idealerweise einheitlichen Strahlrichtung 40) minimiert werden. Alternativ kann entweder der x-Rasterungsspiegel 46 oder der y-Rasterungsspiegel 52 in der ersten Brennebene der Fokussieroptik 54 angeordnet sein. So kann die Auffächerung auf die Rasterung in y-Richtung bzw. in x-Richtung beschränkt werden (und vom Rekonstruktionsalgorithmus berücksichtigt werden). Ein weiterer Verstellmechanismus ist vorgesehen, der die zwei Rasterungsspiegel 46 und 52 (in x-Richtung bzw. in Strahlrichtung 40) zu versetzen vermag. Eine erweiterte Ausführung des optischen Stellglieds 30 umfasst die eingangs erwähnte Relaisoptik. Mittels der Relaisoptik kann sowohl der x-Rasterungsspiegel 46 als auch der y-Rasterungsspiegel 52 in jeweils einer Brennebene (der Relais-Optik) angeordnet werden. Der im Strahlverlauf letzte Rasterungsspiegel 52 liegt zudem in der ersten Brennebene der Fokussieroptik 54. So ist eine Auffächerung in x-Richtung und in y-Richtung minimierbar. Für vereinfachte Ausführungsformen wird auf einzelne oder alle Verstellmechanismen verzichtet.

Das Volumen zwischen Probenhalterung 14 und dem Probengefäß 56 ist mit einer dem Brechungsindex der Probenhalterung 14 (und der zu untersuchenden Probe darin) angenäherten Flüssigkeit 58 (auf Höhe des Nadelstrahls 38) angefüllt. Die Flüssigkeit 58 dient als Immersionsflüssigkeit. Indem die Flüssigkeit 58 die Probenhalterung 14 benetzt, wird die (im Allgemeinen gekrümmte) Oberfläche der Probenhalterung 14 als optische Grenzfläche (hinsichtlich unerwünschter Refraktion oder Streuung) nahezu eliminiert. Der durch die Fokussieroptik 54 im Allgemeinen schwach fokussierte Strahl wird durch eine glatte Glasoberfläche 59 des Probengefäßes 56 in das Probengefäß 56 abgebildet. "Glatt" bedeutet, dass die Glasoberfläche 59 eben (d.h. ungekrümmt) ist. Zudem kann "glatt" eine (möglichst) geringe Oberflächenrauhigkeit umfassen.

Durch die Probe transmittierte Strahlung wird von einer zweiten Fokussieroptik 60 auf einen Transmissionsphotodetektor 62 abgebildet. Eine erste Brennebene der zweiten Fokussieroptik 60 fällt mit der zweiten Brennebene der ersten Fokussieroptik 54 zusammen. Eine hintere zweite Brennebene der zweiten Fokussieroptik 60 stimmt mit einer Position des Transmissionsphotodetektors 62 überein. Hierbei ist keine exakte Positionierung der Brennebenen der zweiten Fokussieroptik 60 erforderlich. Die Anforderungen an die Abbildungseigenschaften der zweiten Fokussieroptik 60 sind geringer als die der ersten Fokussieroptik 54.

Zum Vorteil eines größeren vom Transmissionsphotodetektor 62 abgedeckten Dynamikbereichs und zur Verbesserung des Erfassungsdynamikbereichs (ohne Geschwindigkeitseinbußen bei der Bilderfassung) besitzt der Transmissionsphotodetektor 62 ein nicht-lineares Ansprechverhalten, vorzugsweise ein logarithmisches Ansprechverhalten. Die "Geschwindigkeit" der Bilderfassung betrifft insbesondere die Belichtungsdauer je Messstellung. Des Weiteren sind logarithmierte Intensitäten vorteilhaftere (da unmittelbar umsetzbare) Ausgangsdaten zur computergestützten Rekonstruktion.

In Verbindung mit der Transmissionsdetektoreinheit 60, 62 sind ferner Dunkelfeldmikroskopie, Polarisationsmikroskopie, Interferenzkontrastmikroskopie (die auch als "Differential Interference Contrast Microscopy" oder "DIC Microscopy" bezeichnet wird), oder Phasenkontrastmikroskopie realisierbar.

In einem vereinfachten Ausführungsbeispiel wird auf die zweite Fokussieroptik 60 und den Transmissionsphotodetektor 62 verzichtet. In einem ergänzten Ausführungsbeispiel ist ferner eine Blende zwischen der zweiten Fokussieroptik 60 und dem Transmissionsphotodetektor 62 vorgesehen zur Begrenzung der Vorwärtsstreuung. Indem (statt dem Transmissionsphotodetektor 62) die Blende in der (hinteren) zweiten Brennebene der zweiten Fokussieroptik 60 angeordnet ist, ist die vom gesamten Abschnitt des Nadelstrahls in der Probenhalterung 14 ausgehenden Vorwärtsstreuung separat erfassbar. Im Fall nicht-resonanter Fluoreszenz können Transmission und Vorwärtsstreuung ferner durch ein dichroitisches Filter getrennt werden.

Von der Probe geht aufgrund des einfallenden Nadelstrahls 38 Streustrahlung 64 aus. Oftmals ist die von der Probe ausgesendete Streustrahlung 64 nahezu isotrop (d.h. in alle Richtungen im Wesentlichen gleichmäßig) verteilt. Im Fall von Fluoreszenzstrahlung als Streustrahlung 64 ist die Strahlungsquelle 18 dazu ausgebildet, einen Nadelstrahl 38 zu erzeugen, der einen oder mehrere ausgewählte Übergänge eines (die Probe funktionell oder strukturell markierenden) Fluorophors in der Probe anregt. Die Intensität der reemittierten Streustrahlung 64 wird in Form einer erfassten Streuintensitätsverteilung, I(x,y,π), bei verschiedenen Messstellungen in den Richtungen x und y sowie verschiedenen Drehstellung π erfasst. Allgemein beinhaltet die erfasste Streuintensitätsverteilung (durch die tomographische Rekonstruktion zugängliche) Informationen über die Fluorophor-Konzentration, p(x,y,z), in der Probe (im Fall der Fluoreszenzstrahlung) oder den Streukoeffizienten, σ(x,y,z), der Probe (im Fall eines anderen Streumechanismus). Für eine gegebene Drehstellung π ist die (integrale) Streuintensitätsverteilung I(x,y,π) eine 2-dimensionale Information, die aus der 3-dimensionalen Streuintensität σ(x,y,z) (im Wesentlichen durch Projektion in die Strahlrichtung 40 oder Summation entlang des Nadelstrahls 38) resultiert.

Die Streustrahlung 64 wird mittels der Detektoreinheit 16 integral erfasst. Die integrale Erfassung der Streustrahlung 64 umfasst die ortsunaufgelöste und richtungsunaufgelöste Erfassung der durch den Nadelstrahl 38 bewirkten Streustrahlung 64.

Die Detektoreinheit 16 umfasst einen Streustrahlungskollektor 66 zur integralen Erfassung der Streustrahlung 64 in einem möglichst großen Raumwinkel um die Probenhalterung 14. Dem erfassten Raumwinkel entspricht eine (auf den Brechungsindex normierte) numerische Apertur NA/n. Zur integralen Erfassung der Streustrahlung 64 ist die Probenhalterung 14 (und das Probengefäß 56) im Zentrum eines Integrators 68 des Streustrahlungskollektors 66 angeordnet. Der Integrator 68 umfasst eine im Innern hochreflektierende und stark lichtstreuende Kapsel. Eine Innenfläche 69 des Integrators 68 ist mit Bariumsulfat (oder einem anderen streuenden Medium) beschichtet. In einer einfacheren Ausführung des Integrators 68 weist die Innenfläche 69 eine raue Grundfläche auf, auf die eine Metallschicht (vorzugsweise aus Silber) aufgedampft ist. Das in Fig. 1 gezeigte Ausführungsbeispiel setzt als Integrator 68 eine Ulbricht-Kugel ein. Durch die (mehrfache) Streureflexion wird die (von der Probe ausgehende) Streustrahlung im Innern des Integrators 68 homogen verteilt. Die Homogenität hat (bei nahezu verlustfreier Streureflexion) mehrere technische Aspekte zur Folge. Zum einen ist bei Konstruktion und Fertigung der Vorrichtung 10 keine exakte Positionierung der Probenhalterung 14 (und des Probengefäßes 56) im Zentrum des Integrators 68 erforderlich. So sind von einer Kugelform abweichende Hohlkörper als Integrator 68 geeignet. In einer kompakten Ausführung ist der Integrator 68 durch das entsprechend beschichtete Probengefäß 56 realisiert. Zum andern ist die Intensität der Streustrahlung an allen Öffnungen 70, 72, 74 des Integrators 68 im Wesentlichen gleich groß.

Der Anteil der Streustrahlung 64, die an der Messöffnung 72 austritt, steht in Zusammenhang mit der gesamten Streustrahlung 64 gemäß einem Öffnungsverhältnis der Messöffnung 72 zu einer gesamten (die Öffnungen 70, 72 und 74 umfassenden) Öffnungsfläche des Integrators 68. So ist zur integralen Erfassung der Streustrahlung 64 die gesamte Streustrahlung 64 bestimmbar durch Erfassen der an der Messöffnung 72 austretenden Streustrahlung.

Für ein hohes Signal-Rausch-Verhältnis ist die Messöffnung 72 des Integrators 68 möglichst groß gewählt, und alle anderen Öffnungen 70, 74 im Integrator 68 sind möglichst klein gewählt. Um das Öffnungsverhältnis zu verbessern, ist in einer optimierten Variante des Ausführungsbeispiels lediglich ein x-Stellglied 42 vorgesehen (wie vorstehend beschrieben) und die Beleuchtungsöffnung 70 ist ein in y-Richtung möglichst schmaler (und in x-Richtung verlaufender) Schlitz. Ähnlich ist die Transmissionsöffnung 74 ein (in y-Richtung möglichst schmaler) Schlitz in x-Richtung. Eine Schlitzhöhe Δy beträgt 100% bis 500%, vorzugsweise etwa 200%, einer Strahlbreite des Nadelstrahls 38 am Schlitz. Bei einer beispielhaften Ausführung sind die Beleuchtungsöffnung 70 und die Transmissionsöffnung 74 jeweils ein Δy=0,5 mm hoher und Δx=12 mm breiter Schlitz, und die Messöffnung 72 ist quadratisch mit 10 mm Kantenlänge. Somit beträgt für die beispielhafte Ausführung eine dem Öffnungsverhältnis entsprechende Idealeffizienz 100/112 = 89,3%.

Um bei dem durch eine Schlitzform verbesserten Öffnungsverhältnis auch Messstellungen mit unterschiedlichem y-Versatz zu erfassen, wird (alternativ zum y-Stellglied 48 mit dem y-Rasterungsspiegel 52) ein y-Aktuator eingesetzt, der die Probenhalterung 14 (vorteilhafterweise synchron mit dem Probengefäß 56) in y-Richtung entsprechendem dem gewünschten y-Versatz (hoch oder runter) verfährt. In einer alternativen Variante des Ausführungsbeispiels ist die Probenhalterung 14 (und das Probengefäß 56) in y-Richtung stationär, wobei die Lichtquelle 12 und die Detektoreinheit 16 (oder alle anderen Bauelemente außer der Probenhalterung 14 und dem Probengefäß 56) in y-Richtung auf und ab verfahrbar sind.

Aus technischen Gründen ist einem größeren Integrator 68 ein möglichst klein bemessener Integrator 68 vorzuziehen, zu dessen Vorteilen geringere Streureflexionsverluste an der kleineren Innenfläche 69 und schmalere Schlitze an der Beleuchtungsöffnung 70 und der Transmissionsöffnung 74 gehören können.

Die Messöffnung 72 sollte gleichgroß oder größer als die Probe, die Probenhalterung 14, oder das Probengefäß 56 sein. (Eine mögliche Probengröße kann etwa 2 mm betragen. Bei Proben größerer Ausdehnung kann die Messöffnung 72 auch kleiner als die Probengröße sein.) Genauer sollte eine Kantenlänge der quadratischen Messöffnung 72 größer als eine Länge der Probenhalterung 14 in der Strahlrichtung 40 sein. Da die homogenisierte Streustrahlung 64 im Integrator 68 auch auf die Probehalterung 14 fällt, kann so ein Anteil mehrfach gestreuter Strahlung an der Messöffnung 72 (und ein dementsprechendes unerwünschtes Hintergrundsignal) unterdrückt werden. Im Fall von nicht-resonanter Fluoreszenzstrahlung unterdrückt die Wellenlängenverschiebung zudem, dass Fluoreszenzstrahlung weiter Fluoreszenz anregt.

In einer Weiterbildung des Ausführungsbeispiels ist eine Schlitzbreite der Beleuchtungsöffnung 70 und der Transmissionsöffnung 74 variabel. Ferner sind optische Einbauten im Integrator 68 oder Optiken in den Öffnungen 70, 72, 74 dazu ausgebildet, Verluste an den Öffnungen 70, 72, 74 weiter zu verringern.

Der Streustrahlungskollektor 66 umfasst ferner einen ersten Kollimator 76, welcher die Divergenz der aus der Messöffnung 72 austretenden Streustrahlung zu reduzieren vermag. Der erste Kollimator 76 umfasst entweder einen sich verjüngenden Lichtleiter ("Tapered Light Pipe") 76a; eine stark brechende Linse 76b, insbesondere eine Kondensorlinse; einen (nicht gezeigten) Hohlspiegel mit zentraler Öffnung; oder eine zwei oder mehr dieser Elemente umfassende Kombination. Als Lichtleiter ist ein reflektiv beschichteter (verspiegelter) Lichthohlleiter oder ein dielektrischer (die Totalreflexion nutzender) Lichtwellenleiter einsetzbar. Der im Ausführungsbeispiel der Fig. 1 gezeigte erste Kollimator 76 umfasst den Lichthohlleiter 76a und die Linse 76b. Die Divergenz der teilkollimierten Streustrahlung 78' am Ausgang des Lichthohlleiters 76a wird von der Linse 76b weiter reduziert zur kollimierten Streustrahlung 78.

In einer (nicht gezeigten) Alternative sind Messöffnung 72 und Lichtleiter 76a durch ein Glasfaserbündel ersetzt. Das Glasfaserbündel umfasst eine Vielzahl Glasfasern, die sternförmig (d.h. radial) aus einer (den Integrator 68 insoweit ersetzenden) Kugel verlaufen. Die die Streustrahlung 64 aus der Probenhalterung 14 aufnehmenden Enden der Glasfasern sind über die Innenfläche 69 der Kugel gleichmäßig verteilt. Die Glasfasern sind dazu ausgebildet, die Streustrahlung 64 in einer Ebene zu bündeln. Auch in dieser Alternative wird so teilkollimierte Streustrahlung 78' erhalten, die durch eines der vorgenannten Elemente des Kollimators 76 zur kollimierten Streustrahlung 78 abgebildet wird.

Die kollimierte Streustrahlung 78 weist eine reduzierte Divergenz auf mit einer Restdivergenz. Eine hinreichend geringe Restdivergenz ermöglicht, ein dichroitisches Filter auf die kollimierte Strahlung 78 anzuwenden. Die meisten Filter sind nach einem ersten Kollimator 76 anwendbar, der eine Restdivergenz von unter +/- 30° erreicht. Bei Verwendung von Farbglasfiltern unterliegt die Streustrahlung 64 keiner nennenswerten Divergenzbeschränkung. So ist in vereinfachten Ausführungsbeispielen mit Farbglasfiltern ein einfacher erster Kollimator 76 (mit nur einem der Elemente) oder kein erster Kollimator 76 vorgesehen.

Die kollimierte Streustrahlung 78 durchläuft wahlweise ein Filter von mehreren Filtern, die in einer als Filterrad oder Filterschieber ausgebildeten Filterwahleinheit 80 der Detektoreinheit 16 zusammengefasst sind. Im Fall von Fluoreszenzstrahlung sind spektrale Bereiche hoher Transparenz der Filter jeweils auf einen Fluoreszenzübergang eines oder verschiedener Fluorophore abgestimmt. Eine resultierende gefilterte Streustrahlung 82 weist die zu messende Intensität auf.

In ergänzten Ausführungsbeispielen werden (nicht gezeigte) dichroitische Spiegel zur Aufspaltung verschiedener Farbkomponenten in verschiedene Strahlpfade eingesetzt. Die dichroitischen Spiegel sind ergänzend an oder anstelle der Filterwahleinheit 80 angeordnet. Dies ermöglicht eine simultane Erfassung der verschiedenen in der Streustrahlung 64 enthaltenen Farbkomponenten.

Die Detektoreinheit 16 umfasst ferner einen zweiten Kollimator 84 und einen (in einer hinteren Brennebene des zweiten Kollimators 84 angeordneten) Signalgeber 86 zur Photodetektion. Im in Fig. 1 gezeigten Ausführungsbeispiel ist der zweite Kollimator 84 eine Sammellinse, vorzugsweise eine Kondensorlinse. Zur Optimierung einer Quantenausbeute fokussiert der zweite Kollimator 84 die gefilterte Streustrahlung 82 auf den Signalgeber 86, ohne dessen numerische Apertur zu überschreiten. Im in Fig. 1 gezeigten Ausführungsbeispiel ist der Signalgeber 86 ein Photoelektronenvervielfacher. Für eine möglichst geringe auf die Probe einwirkende Strahlintensität weist der Photoelektronenvervielfacher eine hohe Ansprechempfindlichkeit (und Quantenausbeute) auf.

Ferner ist der Signalgeber 86 (quer zur Richtung der gefilterte Streustrahlung 82) verschiebbar, um eine optisch empfindliche Fläche (Detektorfläche) des Signalgebers 86 optimal auszuleuchten. So kann die Detektoreinheit 16 die Streustrahlung 64 der Messöffnung 72 effizient auf die Detektorfläche leiten.

Folgende Verfahren sind mit der beschriebenen Vorrichtung 10 durchführbar: FLIM ("Fluorescence Lifetime Microscopy"), wobei Fluoreszenzlebenszeit und Lichtlaufzeit im Integrator 68 aufeinander abgestimmt sind zur Vermeidung von Einschränkungen durch diffuse Streuung im Integrator 68; MPM (Multi-Photonen-Mikroskopie); FRET ("Fluorescence Resonance Energy Transfer"); FRAP ("Fluorescence Recovery after Photobleaching"); STED ("Stimulated Emission Depletion"), wobei nach dem Nadelstrahl 38 als Anregungsstrahl ein "Röhrenstrahl" als Ausschaltstrahl mit im Wesentlichen zylindersymmetrischer Intensitätsverteilung eingestrahlt wird; FLIP ("Fluorescence Loss in Photobleaching"); sogenannte "Superresolution Microscopy"; Streulichtmikroskopie; evtl. auch durchführbar können sein: STORM ("Stochastic Optical Reconstruction Microsopy") und FCS ("Fluorescence Correlation Spectroscopy").

Fig. 2 zeigt ein zweites Ausführungsbeispiel einer Vorrichtung 210 zur tomographischen Bilderfassung. Für Bauelemente des zweiten Ausführungsbeispiels mit gleichen Bezugszeichen wie im ersten Ausführungsbeispiel gilt, insbesondere hinsichtlich ihrer Eigenschaften, Beschaffenheit, Funktion und ihrem Zusammenwirken, das vorstehend beschriebene entsprechend.

Das zweite Ausführungsbeispiel unterscheidet sich vom ersten Ausführungsbeispiel dadurch, dass kein separater Integrator 68 zur Integration und Homogenisierung der erfassten Streustrahlung 64 vorgesehen ist. Mit anderen Worten: Zur integralen Erfassung der Streustrahlung 64 umfasst ein Streustrahlungskollektor 266 keinen Integrator 68. Das strahltransparente Probengefäß 256 weist an allen Seitenflächen (d.h. allen Flächen außer einer transparenten Bodenfläche 272) eine Reflexionsfläche 269 auf. Die Reflexionsfläche 269 übernimmt Funktion und Wirkung der (diffusiv reflektierenden) Innenfläche 69. So kann auch das Probengefäß 256 Funktion und Wirkung des Integrators 68 übernehmen.

Eine einfache erste Ausführung des Probengefäßes 256 ist eine unbeschichtete Glasküvette. Streustrahlung 64, die tendenziell zur Bodenfläche 272 der unbeschichteten Küvette abgestrahlt wird, wird durch Totalreflexion an der Grenzschicht Küvette-Luft bis zur Bodenfläche 272 geführt. So ist ein Anteil von etwa 12,5% der Streustrahlung 64 erfassbar. Der Anteil ergibt sich durch den Winkel der Totalreflexion an der Wandung des Probengefäßes 256 (d.h. der Grenzfläche von Küvette zu Luft). In einer zweiten Ausführung des Probengefäßes 256 weist ein Grundkörper aus Glas (außenseitig oder innenseitig) eine Bariumsulfatschicht oder eine Metallschicht als Reflexionsfläche 269 auf, wie vorstehend im Zusammenhang mit der Innenfläche 69 beschrieben. In einer dritten Ausführung des Probengefäßes 256 fungieren die Seitenflächen eines metallischen Grundkörpers als Reflexionsfläche 269. In einer vierten Ausführung des Probengefäßes 256 stimmt dieses mit dem Probengefäß 56 überein und ist ferner passgenau in einen (nicht gezeigten) Spiegelkasten mit Reflexionsflächen 269 eingefasst.

Zur Einstrahlung des Nadelstrahls 38 und optional zur Transmissionsdetektion weist das Probengefäß 256 eine Beleuchtungsöffnung 270 beziehungsweise eine Transmissionsöffnung 274 auf. Die Beleuchtungsöffnung 270 und gegebenenfalls die Transmissionsöffnung 274 entsprechen (funktional) der Öffnung 70 beziehungsweise der Öffnung 74. Wie im Zusammenhang mit den Öffnungen 70, 72, 74 vorstehend beschrieben, sind zur Minimierung von Strahlungsverlusten die Öffnungen 270 und 274 als schmale Schlitze in x-Richtung ausgebildet und das optische Stellglied 30 rastert den Nadelstrahl 38 nur in x-Richtung. Für Messstellungen mit y-Versatz ist die Probenhalterung 14 relativ zu allen anderen Bauelementen in y-Richtung verfahrbar, wobei die Probenhalterung 14 oder die anderen Bauelemente stationär sind, wie vorstehend für das erste Ausführungsbeispiel beschrieben ist. Die Reflexionsfläche 269 weist gegenüberliegende strahltransparente Schlitze als Öffnungen 270 und 274 auf. Im Fall des Grundkörpers aus Glas sind die Öffnungen 270, 274 unbeschichtet. Im Fall des metallischen Grundkörpers umfassen die Öffnungen 270, 274 planparallele Fenster. Im Fall von Fluoreszenzstrahlung als Streustrahlung weisen die Fenster zur weiteren Reduzierung von Strahlungsverlusten eine die Anregungsstrahlung (des Nadelstrahls 38) transmittierende und die Fluoreszenzstrahlung reflektierende dichroitische Schicht auf oder bestehen aus einem planparallelen doppelbrechenden Kristall (mit solchen optischen Eigenschaften). Bei der vierten Ausführung mit dem Spiegelkasten sind die Öffnungen 270, 274 Durchgangsausnehmungen des Spiegelkastens.

Die Bodenfläche 272 ist für die Streustrahlung 64 transparent. Im Fall des Grundkörpers aus Glas ist die Bodenfläche 272 unbeschichtet. Im Fall des metallischen Grundkörpers umfasst die Bodenfläche 272 ein planparalleles Fenster. Bei der vierten Ausführung mit dem Spiegelkasten ist der Spiegelkasten an der Bodenfläche 272 offen.

Die in Fig. 2 für Fluoreszenzstrahlung als Streustrahlung gezeigte fünfte Ausführung des Probengefäßes 256 umfasst einen transparenten Grundkörper, der an den Seitenflächen eine dichroitische Schicht aufweist. Alternativ oder ergänzend bestehen die Seitenflächen des Probengefäßes aus einem dichroitischen Filter oder einem Interferenzfilter. So sind die Seitenflächen des Probengefäßes 256 dazu ausgebildet, die Anregungsstrahlung (des Nadelstrahls 38) zu transmittieren und die Fluoreszenzstrahlung zu reflektieren. So ist ein Anteil an der Streustrahlung 64 von etwa 50% oder mehr erfassbar. Hinsichtlich der Fluoreszenzstrahlung (d.h. der Streustrahlung 64) fungieren die Seitenflächen als Reflexionsfläche 269. Da die Seitenflächen hinsichtlich der Anregungsstrahlung (des Nadelstrahls 38) transparent sind, ermöglichen die Seitenflächen zudem den Eintritt und Austritt des Nadelstrahls 38. D.h. die gesamten Seitenflächen stehen als Beleuchtungsöffnung 270 oder Transmissionsöffnung 274 zur Verfügung. Das Stellglied 30 ist zur Rasterung (d.h. Versatz) des Nadelstrahls in der x-Richtung und der y-Richtung ausgebildet. Ohne Strahlungsverluste kann auf Fenster (insbesondere Schlitze) verzichtet werden. Eine Verfahrbarkeit der Probenhalterung 14 in y-Richtung ist nicht erforderlich.

In allen Ausführungen des Probengefäßes 256 wird durch Reflexion (oder Totalreflexion) der Streustrahlung 64 an der Reflexionsfläche 269 die Streustrahlung 64 zu der Bodenfläche 272 geleitet. Zur integralen Erfassung der Streustrahlung 64 wird ein durch die Bodenfläche 272 austretender Anteil der Streustrahlung erfasst. Die Bodenfläche 272 entspricht (funktional) der Messöffnung 72. Der Anteil der durch die Bodenfläche 272 austretenden Streustrahlung an der gesamten Streustrahlung ist bestimmbar, wie im Zusammenhang mit der Messöffnung 72 vorstehend beschrieben. Ferner ist der Anteil der durch die Bodenfläche 272 austretenden Streustrahlung durch einen Reflexionswinkel bestimmbar, unter dem die Streustrahlung von der Reflexionsfläche 269 reflektiert wird. Soweit die Reflexion an den Reflexionsflächen 269 Totalreflexion umfasst (wie bei der ersten und fünften Ausführung des Probengefäßes 256), ist der Reflexionswinkel zur Anteilsbestimmung ein Totalreflexionswinkel an der Reflexionsfläche 269.

Fig. 2b zeigt ferner eine optionale zweite Detektoreinheit 16', die nachstehend im Zusammenhang mit einem vierten Ausführungsbeispiel einer Vorrichtung 410 näher beschreiben ist. Zur Vergrößerung des erfassten Raumwinkels sind die Detektoreinheiten 16, 16' der verschiedenen Ausführungsbeispiele kombinierbar.

Um (mit jeder der Ausführungen des Probengefäßes 256) mehr als 12,5% der Streustrahlung aus dem Probengefäß 256 auszukoppeln, ist der erste Kollimator 76 des Streustrahlungskollektors 266 in direktem (brechungsindex-angepassten) optischen Kontakt mit der Bodenfläche 272. Wie vorstehend beschrieben, umfasst der erste Kollimator 76 probenseitig einen sich verjüngenden Lichtleiter 76a.

Alle weiteren Merkmale des zweiten Ausführungsbeispiels entsprechen jenen des ersten Ausführungsbeispiels. Insbesondere besitzen sich entsprechende Baugruppen 12, 14, 16 und deren Bauelemente dieselben Freiheitsgrade.

Folgende Verfahren sind mit der beschriebenen Vorrichtung 210 durchführbar: FLIM ("Fluorescence Lifetime Microscopy"); MPM (Multi-Photonen-Mikroskopie); FRET ("Fluorescence Resonance Energy Transfer"); FRAP ("Fluorescence Recovery after Photobleaching"); STED ("Stimulated Emission Depletion"), wobei nach dem Nadelstrahl 38 als Anregungsstrahl ein "Röhrenstrahl" als Ausschaltstrahl mit im Wesentlichen zylindersymmetrischer Intensitätsverteilung eingestrahlt wird; FLIP ("Fluorescence Loss in Photobleaching"); sogenannte "Superresolution Microscopy"; Streulichtmikroskopie; evtl. auch durchführbar können sein: STORM ("Stochastic Optical Reconstruction Microsopy") und FCS ("Fluorescence Correlation Spectroscopy").

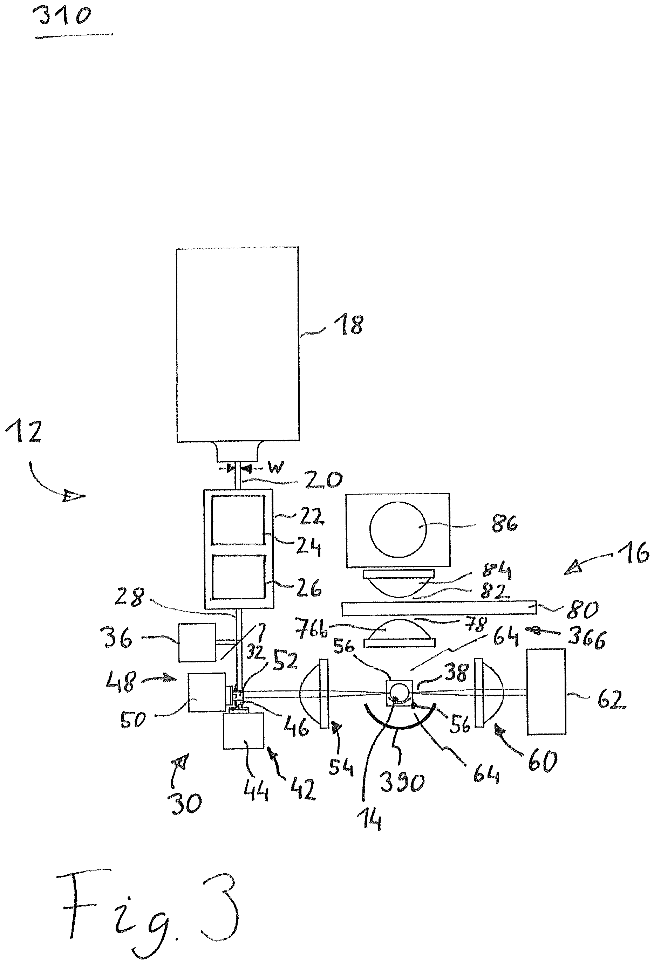

Fig. 3 zeigt ein drittes Ausführungsbeispiel einer Vorrichtung 310 zur tomographischen Bilderfassung. Für Bauelemente des dritten Ausführungsbeispiels mit gleichen Bezugszeichen wie im ersten oder zweiten Ausführungsbeispiel gilt, insbesondere hinsichtlich ihrer Eigenschaften, Beschaffenheit, Funktion und ihrem Zusammenwirken, das vorstehend beschriebene entsprechend.

Das dritte Ausführungsbeispiel unterscheidet sich von einem der vorhergehenden Ausführungsbeispiele dadurch, dass die Streustrahlung 64 direkt mit einem ersten Kollimator eingesammelt (d.h. integriert) wird. Mit anderen Worten: Zur integralen Erfassung der Streustrahlung 64 umfasst ein Streustrahlungskollektor 366 keinen Lichtleiter 76a. Der Streustrahlungskollektor 366 umfasst als ersten Kollimator eine Linse 76b, wie vorstehend beschrieben. Zusätzlich umfasst der Streustrahlungskollektor 366 einen Reflektor 390. Die Probenhalterung 14 und das Probengefäß 56 sind zwischen dem Reflektor 390 und der Linse 76b angeordnet. Die Probenhalterung 14, genauer die Drehachse, liegt in einer Brennebene der Linse 76b. Als Reflektor 390 ist ein sphärischer Hohlspiegel oder eine (auch als "Katzenauge" bezeichnete) Vielzahl Retroreflektoren eingesetzt. Letzterer Fall ist die Vorrichtung 310 besonders leicht zu justieren. Im Fall des sphärischen Hohlspiegels liegt ein Sphärenmittelpunkt in der Probenhalterung 14, genauer auf der Drehachse. So wirft der Reflektor 390 (in beiden Fällen) die im Raumwinkel des Reflektors 390 eingefangene Streustrahlung 64 zu deren Ursprung zurück. So sind bis zu doppelt so viele Photonen der Streustrahlung 64 erfassbar. Für eine Ausführungsform, bei der die reflektierte Streustrahlung 64 (als nahezu paralleles Strahlenbündel) am Probengefäß 56 vorbei läuft, wird auf das nachstehend beschriebene Ausführungsbeispiel der Vorrichtung 510 verwiesen.

Alternativ können für eine vergleichbare Erhöhung der Empfindlichkeit bzw. Verringerung der Intensität des eingestrahlten Nadelstrahls 38 statt eines Reflektors 390 auch zwei oder mehr Reflektorsegmente um die Probenhalterung 14 angeordnet sein.

Alle weiteren Merkmale des dritten Ausführungsbeispiels entsprechen solchen des ersten oder zweiten Ausführungsbeispiels. Insbesondere besitzen sich entsprechende Baugruppen 12, 14, 16 und deren Bauelemente dieselben Freiheitsgrade.

Folgende Verfahren sind mit der beschriebenen Vorrichtung 310 durchführbar: FLIM ("Fluorescence Lifetime Microscopy"); MPM (Multi-Photonen-Mikroskopie); FRET ("Fluorescence Resonance Energy Transfer"); FRAP ("Fluorescence Recovery after Photobleaching"); STED ("Stimulated Emission Depletion"), wobei nach dem Nadelstrahl 38 als Anregungsstrahl ein "Röhrenstrahl" als Ausschaltstrahl mit im Wesentlichen zylindersymmetrischer Intensitätsverteilung eingestrahlt wird; FLIP ("Fluorescence Loss in Photobleaching"); sogenannte "Superresolution Microscopy"; Streulichtmikroskopie; evtl. auch durchführbar können sein: STORM ("Stochastic Optical Reconstruction Microsopy") und FCS ("Fluorescence Correlation Spectroscopy").

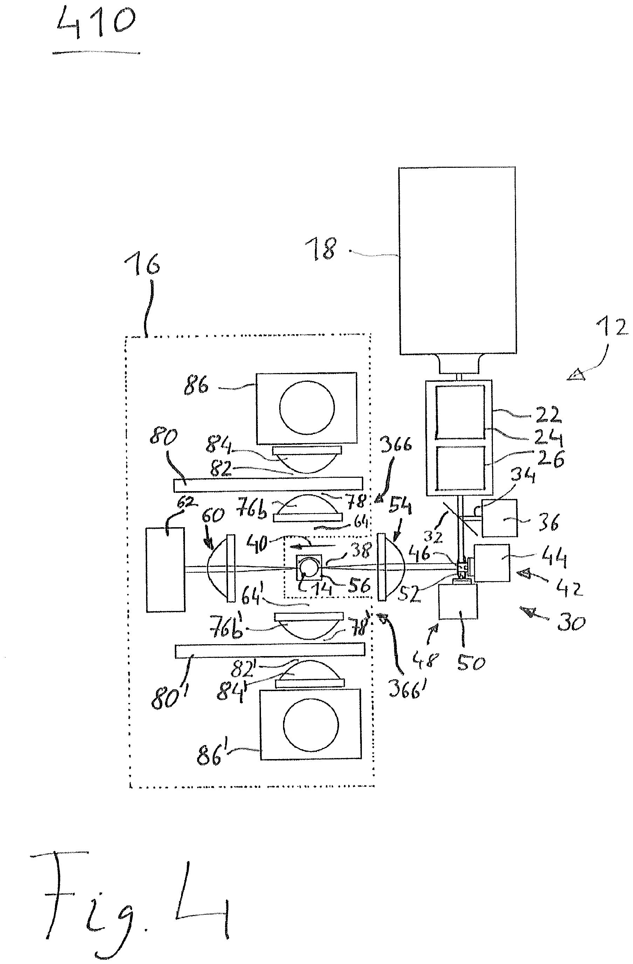

Fig. 4 zeigt ein viertes Ausführungsbeispiel einer Vorrichtung 410 zur tomographischen Bilderfassung. Für Bauelemente des vierten Ausführungsbeispiels mit gleichen Bezugszeichen wie in einem der vorhergehenden Ausführungsbeispiele gilt, insbesondere hinsichtlich ihrer Eigenschaften, Beschaffenheit, Funktion und ihrem Zusammenwirken, das vorstehend beschriebene entsprechend.

Das vierte Ausführungsbeispiel unterscheidet sich von einem der vorhergehenden Ausführungsbeispiele dadurch, dass (statt eines Streustrahlungskollektors 66; 266; 366) zwei oder mehr Streustrahlungskollektoren 366, 366' (oder ebenso 66; 266) um die Probenhalterung 14 angeordnet sind. Mit anderen Worten: Die Detektoreinheit 16 umfasst zwei oder mehr Streustrahlungskollektoren 366, 366' (oder ebenso 66; 266).

In (nicht gezeigten) Ausführungsbeispielen mit einem einzigen Signalgeber 86 sind Prismen oder Spiegel dazu angeordnet, unterschiedliche Strahlpfade der kollimierten Streustrahlung 78, 78' jedes der zwei oder mehr Streustrahlungskollektoren 366, 366' zusammenzuführen. Die zusammengeführte kollimierte Streustrahlung wird dann, wie vorstehend beschrieben, auf den einzigen Signalgeber 86 abgebildet zur Vergrößerung eines erfassten Raumwinkels.

Im in Fig. 4 gezeigten Ausführungsbeispiel ist jeweils eine Filterwahleinheit 80; 80', ein zweiter Kollimator 84, 84', und ein Signalgeber 86; 86' in Zuordnung zu jedem der zwei oder mehr Streustrahlungskollektoren 366, 366' (oder ebenso 66; 266) angeordnet. In einer Variante ist eine gemeinsame Filterwahl mittels der Filterwahleinheiten 80, 80' synchronisiert und Teilsignale der Signalgeber 86, 86' werden zur Vergrößerung des erfassten Raumwinkels zu einem Signal aufaddiert. In einer alternativen Variante ist die Filterwahl mittels der Filterwahleinheiten 80, 80' unabhängig und die zwei oder mehr Signale der Signalgeber 86, 86' werden synchron erfasst. So sind mehrere Signale, die unterschiedlichen Farbkomponenten in der Streustrahlung 64, 64' entsprechen, gleichzeitig erfassbar. Dies ermöglicht, insbesondere im Fall von Fluoreszenzstrahlung, eine schnelle Erfassung (und Rekonstruktion) von funktional markierten Farbbildern.

Alle weiteren Merkmale des vierten Ausführungsbeispiels entsprechen solchen der vorhergehenden Ausführungsbeispiele. Insbesondere besitzen sich entsprechende Baugruppen 12, 14, 16 und deren Bauelemente dieselben Freiheitsgrade.

Folgende Verfahren sind mit der beschriebenen Vorrichtung 410 durchführbar: FLIM ("Fluorescence Lifetime Microscopy"); MPM (Multi-Photonen-Mikroskopie); FRET ("Fluorescence Resonance Energy Transfer"); FRAP ("Fluorescence Recovery after Photobleaching"); STED ("Stimulated Emission Depletion"), wobei nach dem Nadelstrahl 38 als Anregungsstrahl ein "Röhrenstrahl" als Ausschaltstrahl mit im Wesentlichen zylindersymmetrischer Intensitätsverteilung eingestrahlt wird; FLIP ("Fluorescence Loss in Photobleaching"); sogenannte "Superresolution Microscopy"; Streulichtmikroskopie; evtl. auch durchführbar können sein: STORM ("Stochastic Optical Reconstruction Microsopy") und FCS ("Fluorescence Correlation Spectroscopy").

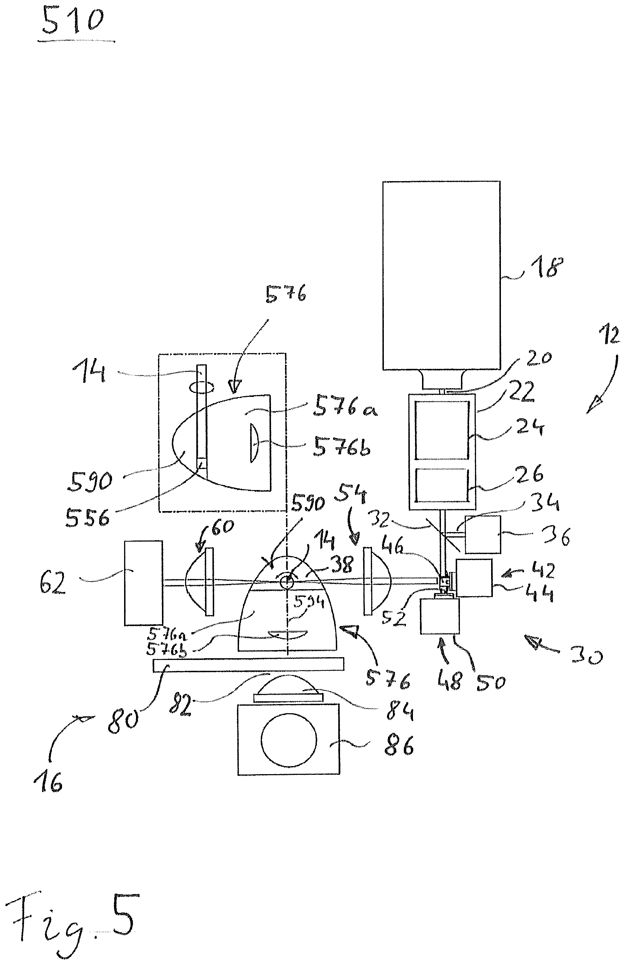

Fig. 5 zeigt ein fünftes Ausführungsbeispiel einer Vorrichtung 510 zur tomographischen Bilderfassung. Für Bauelemente des fünften Ausführungsbeispiels mit gleichen Bezugszeichen wie in einem der vorhergehenden Ausführungsbeispiele gilt, insbesondere hinsichtlich ihrer Eigenschaften, Beschaffenheit, Funktion und ihrem Zusammenwirken, das vorstehend beschriebene entsprechend.

Das fünfte Ausführungsbeispiel unterscheidet sich von einem der vorhergehenden Ausführungsbeispiele dadurch, dass die Streustrahlung 64 direkt im ersten Kollimator 76, insbesondere in einem seiner Bauelemente 76a, 76b, entsteht. Mit anderen Worten: Der erste Kollimator 76 umfasst (funktional) das Probengefäß 56.

Im in Fig. 5 gezeigten Ausführungsbeispiel umfasst ein erster Kollimator 576 einen Glaskörper 576a mit (näherungsweise) der Form eines verlängerten Halbrotationsellipsoids. Der erste Kollimator 576 weist an seinem abgerundeten Ende über etwa ein Drittel seiner Axiallänge einen Reflektor 590 auf. Der Reflektor 590 ist als reflektierenden Beschichtung auf dem Glaskörper 576a realisierbar oder umfasst die (im Zusammenhang mit dem Reflektor 390 beschriebene) Vielzahl Retroreflektoren.

Noch innerhalb dieses Drittels, etwa bei einem Viertel der Axiallänge, ist eine längliche quaderförmige Kollimatorausnehmung 556 vorgesehen. Die Längsachse der Kollimatorausnehmung 556 fällt mit der (vertikalen) Drehachse der Vorrichtung 510 zusammen und schneidet die Symmetrieachse 594 des ersten Kollimators 576 senkrecht. Die Kollimatorausnehmung 556 erstreckt sich nahezu vollständig über den Querschnitt des ersten Kollimators 576, so dass die Kollimatorausnehmung 556 (unten) einseitig geschlossen ist. Die Kollimatorausnehmung 556 ist so bemessen, dass die (über eine die Probe einschließende Länge) in der Kollimatorausnehmung 556 angeordnete Probenhalterung 14 berührungsfrei drehbar ist. So fungiert die Kollimatorausnehmung 556 als Probengefäß 56, wie vorstehend beschrieben. Insbesondere enthält das Volumen zwischen der Probenhalterung 14 und Kollimatorausnehmung 556 die brechungsindex-angepasste Flüssigkeit 58.

Soweit eine nicht-quaderförmige Kollimatorausnehmung 556 nicht bereits plane Seitenflächen zum Eintritt und Austritt des Nadelstrahls 38 aufweist, sind entsprechende plane Fenster in den Seitenflächen vorgesehen. Durch das plane Eintrittsfenster wird der Nadelstrahl 38 in die Probenhalterung fokussiert.

Am dem Reflektor 590 gegenüberliegenden Ende des ersten Kollimators 576 ist in einer konischen Ausnehmung eine Linse 576b auf der Symmetrieachse 594 angeordnet. Die Linse 576b ist ähnlich der vorstehend beschriebenen Linse 76b ausgebildet.

Die optischen Elemente 576a, 590 und 576b sind dazu angeordnet, nahezu die gesamte aus der Probenhalterung 14 austretenden Streustrahlung 64 mit geringer Restdivergenz in Richtung des Signalgebers 86 der Detektoreinheit 16 zu lenken. Die durch den Reflektor 590 in die Probenhalterung 14 zurückgeworfene Streustrahlung wird, zusammen mit der direkt erfassten Streustrahlung 64, durch den ersten Kollimator 576 soweit kollimiert, dass die erfasste Strahlung wie vorstehend beschrieben gefiltert und detektiert werden kann.

Alle weiteren Merkmale des fünften Ausführungsbeispiels entsprechen solchen der vorhergehenden Ausführungsbeispiele. Insbesondere besitzen sich entsprechende Baugruppen 12, 14, 16 und deren Bauelemente dieselben Freiheitsgrade.

Folgende Verfahren sind mit der beschriebenen Vorrichtung 510 durchführbar: FLIM ("Fluorescence Lifetime Microscopy"); MPM (Multi-Photonen-Mikroskopie); FRET ("Fluorescence Resonance Energy Transfer"); FRAP ("Fluorescence Recovery after Photobleaching"); STED ("Stimulated Emission Depletion"), wobei nach dem Nadelstrahl 38 als Anregungsstrahl ein "Röhrenstrahl" als Ausschaltstrahl mit im Wesentlichen zylindersymmetrischer Intensitätsverteilung eingestrahlt wird; FLIP ("Fluorescence Loss in Photobleaching"); sogenannte "Superresolution Microscopy"; Streulichtmikroskopie; evtl. auch durchführbar können sein: STORM ("Stochastic Optical Reconstruction Microsopy") und FCS ("Fluorescence Correlation Spectroscopy").

In allen Ausführungsbeispielen mit nur einem x-Stellglied 42 ist eine photoempfindliche Fläche des Signalgebers 86 (in der y-Richtung) erheblich verkleinerbar. Wie vorstehen beschrieben, ist dies ist auch bei veränderlichem y-Versatz möglich durch ein synchrones Verfahren in y-Richtung entweder von Probenhalterung 14 und Probengefäß 56; 256, oder von Lichtquelle 12 und Detektoreinheit 16.

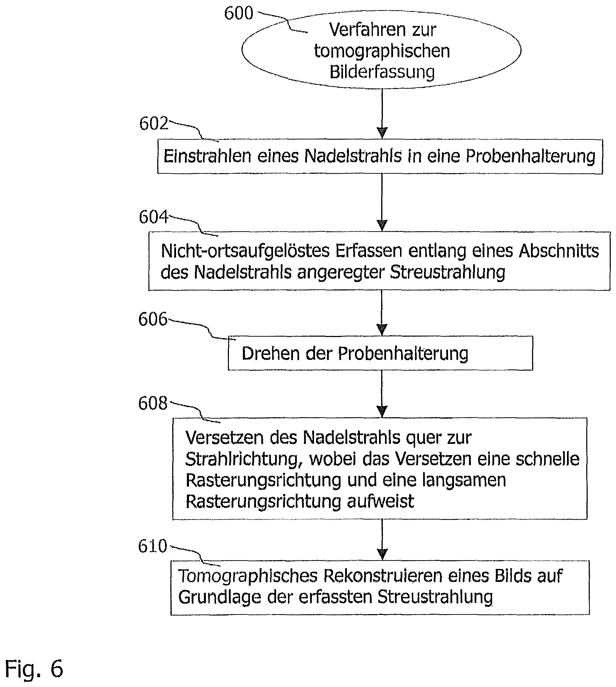

Fig. 6 zeigt ein vereinfachtes Flussdiagramm eines Verfahrens 600 zur tomographischen Bilderfassung. Das Verfahren 600 ist mittels jedem der vorstehend beschriebenen Ausführungsbeispiele der Vorrichtung 10; 210; 310; 410; 510 zur tomographischen Bilderfassung durchführbar.

Das Verfahren 600 zur tomographischen Bilderfassung umfasst die Schritte:
- Einstrahlen 602 eines Nadelstrahls 38 mit einer Strahlrichtung 40 in eine (drehbare) Probenhalterung 14 zur Anregung von Streustrahlung 64,
- nicht-ortsaufgelöstes Erfassen 604 der entlang eines Abschnitts des Nadelstrahls 38 angeregten Streustrahlung 64,
- im Wesentlichen paralleles Versetzen 606 des Nadelstrahls 38 quer zur Strahlrichtung 40 des Nadelstrahls 38 zu einer Vielzahl Messstellungen mit einer schnellen Rasterungsrichtung und einer langsamen Rasterungsrichtung,
- Drehen 608 der Probenhalterung 14 zu einer Vielzahl Drehstellungen für jede der Vielzahl Messstellungen, und
- tomographisches Rekonstruieren 610 eines Bilds (insbesondere eines Schnittbilds oder eines räumlichen Bilds) auf Grundlage (einer Intensität) der erfassten Streustrahlung 64.

Die schnelle Rasterungsrichtung steht vorzugsweise senkrecht auf die langsame Rasterungsrichtung. Die langsame Rasterungsrichtung kann mit der Drehachse zusammenfallen. Im Zusammenhang mit einer der vorstehend beschriebenen Vorrichtungen kann die x-Richtung die schnelle Rasterungsrichtung sein und/oder die y-Richtung kann die langsame Rasterungsrichtung sein. Das Versetzen in die Messstellungen wird auch als Rastern bezeichnet. Das Versetzen kann mittels des vorstehend beschriebenen optischen Stellglieds 30 erfolgen. Der Nadelstrahl 38 kann in einer (zur Strahlrichtung 40 senkrechten) xy-Ebene entsprechend einem "Mäander"-Verlauf versetzt werden. Alternativ kann das Versetzen einen spiralförmigen Verlauf aufweisen oder entlang konzentrischer Kreise erfolgen.

Die langsame Rasterungsrichtung und die Drehung sind im Verfahren 600 vertauschbar. D.h. (zumindest) die Bewegung der langsamen Rasterungsrichtung und das Drehen kommutieren. Dies kann eine Minimierung der gesamten Erfassungszeit ermöglichen.

Soweit die Drehachse parallel zur y-Richtung steht kann die Rekonstruktion bereits vor Abschluss einer vollständigen Bilderfassung beginnen. Vorteilhafterweise wird, nachdem eine Teilerfassung bezüglich der schnellen Rasterungsrichtung und der Drehung (d.h. wenn die Drehung "vor" der langsamen Rasterungsrichtung erfolgt) abgeschlossen ist, eine Schnittebene (senkrecht zur langsamen Rasterungsrichtung) rekonstruiert. So kann nach jeder vollständigen Drehung eine Teilrekonstruktion beginnen.

Ein Steuerungsverfahren (zur Erfassung der Streustrahlung 64) kann das Versetzen in der schnellen Rasterungsrichtung als "innerste Iterationsschleife", das Drehen als "mittlere Iterationsschleife" und das Versetzen in der langsamen Rasterungsrichtung als "äußere Iterationsschleife" umfassen. Die Teilrekonstruktion kann nach Abschluss jeder "mittleren Iterationsschleife" beginnen. Jede Teilrekonstruktion ist unabhängig von einer weiteren Teilerfassung und unabhängig von einer weiteren Teilrekonstruktion ausführbar. So können die Teilrekonstruktionen effektiv parallelisiert werden.

Wie aus der Beschreibung verschiedener Ausführungsbeispielen ersichtlich geworden ist, ermöglicht die Vorrichtung 10; 210; 310; 410; 510 und das Verfahren 600 eine tomographische Bilderfassung einer zumindest teilweise transparenten Probe, die in einer brechungsindexangleichenden Substanz suspendiert ist. Die Strahlungsquelle 18 kann auch mehrere Laser umfassen, deren Teilrohstrahlen zum Rohstrahl 20 überlagert sind. So ist ein Spektrum des Nadelstrahls 38 realisierbar, das an mehrere Übergänge der in die Probe eingebrachten Fluorophore (d.h. mehrere Farben) angepasst ist.

Die beschriebene Technik kann, je nach Ausführungsbeispiel, einen oder mehrere der folgenden Vorteile bieten: Ringartefakte, wie sie bei optischer Projektionstomographie (OPT) auftreten können, werden vermieden. Die Empfindlichkeit für Fluoreszenz (bei Proben mit einer Ausdehnung von mehr als einem Millimeter) ist signifikant größer als bei bekannten Techniken. Somit ist auch ein höherer Probendurchsatz möglich bzw. besteht ein geringeres Schädigungspotential für die Probe. Die Vorrichtung 10; 210; 310; 410; 510 erfordert nur günstig verfügbare Bauelemente.

### Bezugszeichenliste

(Die letzten zwei Ziffern bezeichnen das funktionale Merkmal. Bei dreistelligen Bezugszeichen entspricht die führende Ziffer der Figur.)
- 10, 210, 310, 410, 510: Vorrichtung zur tomografischen Bilderfassung
- 12: Lichtquelle
- 14: Probenhalterung
- 16: Detektoreinheit
- 18: Strahlungsquelle
- 20: Rohstrahl
- 22: Strahlformungsoptik
- 24: Teleskopoptik
- 26: Blenden und Phasenmasken
- 28: Formstrahl
- 30: optisches Stellglied
- 32: Strahlteiler
- 34: Teilstrahl
- 36: Referenzdetektor
- 38: Nadelstrahl
- 40: Strahlrichtung
- 42: x-Stellglied
- 44: x-Aktuator
- 46: x-Rasterungsspiegel
- 48: y-Stellglied
- 50: y-Aktuator
- 52: y-Rasterungsspiegel
- 54: (erste) Fokussieroptik
- 56, 256; 556: Probengefäß; Kollimatorausnehmung
- 58: Flüssigkeit
- 59: Glasoberfläche
- 60: zweite Fokussieroptik
- 62: Transmissionsphotodetektor
- 64, 64': Streustrahlung
- 66, 266, 366, 366': Streustrahlungskollektor
- 68: Integrator
- 69; 269: Innenfläche; Reflexionsfläche
- 70, 270: Beleuchtungsöffnung
- 72; 272: Messöffnung; transparente Bodenöffnung
- 74, 274: Transmissionsöffnung
- 76, 576: erster Kollimator
- 576a: Glaskörper
- 76a, 576a: Lichtleiter, insb. Lichthohlleiter
- 76b, 576b: Linse
- 78': teilkollimierten Streustrahlung
- 78: kollimierten Streustrahlung
- 80, 80': Filterwahleinheit
- 82: gefilterte Streustrahlung
- 84: zweiter Kollimator
- 86; 86': Signalgeber
- 88: Schrittmotor
- 390, 590: Reflektor
- 594: Symmetrieachse

## Patentansprüche

1. Vorrichtung (10; 210; 310; 410; 510) zur tomographischen Bilderfassung, umfassend
- eine Probenhalterung (14),
- eine Lichtquelle (12), die zur Erzeugung eines ein zur Aufnahme einer Probe vorgesehenes Probenvolumen der Probenhalterung (14) durchquerenden Nadelstrahls (38) mit einer Strahlrichtung (40) ausgebildet ist, und die ein optisches Stellglied (30) aufweist, das den das Probenvolumen der Probenhalterung (14) durchquerenden Nadelstrahl (38) quer zur Strahlrichtung (40) zu versetzten vermag bei im Wesentlichen unveränderter Strahlrichtung (40), und
- eine Detektoreinheit (16), die zur nicht-ortsaufgelösten Erfassung zumindest eines Anteils einer von einem Abschnitt des Nadelstrahls (38) innerhalb des Probenvolumens der Probenhalterung (14) entweichenden Streustrahlung (64; 64') ausgebildet ist, wobei die Streustrahlung (64; 64') aus der Strahlrichtung herausgestreute Streustrahlung umfasst, **dadurch gekennzeichnet, dass** die Detektoreinheit (16) wenigstens einen Streustrahlungskollektor (66; 266; 366; 366') aufweist, der dazu ausgebildet ist oder die zusammen dazu ausgebildet sind, die Streustrahlung (64; 64') integral in einem Raumwinkel um das Probenvolumen oder die Probenhalterung (14) von mindestens 0,12 n sr zu erfassen.

2. Vorrichtung nach Anspruch 1, wobei der Nadelstrahl die Probenhalterung und/oder die Probe durchquert.

3. Vorrichtung nach Anspruch 1 oder 2, wobei die Probenhalterung (14) und die Lichtquelle (12) um eine Drehachse relativ zueinander drehbar sind, wobei die Strahlrichtung (40) zur Drehachse im Wesentlichen senkrecht ist.

4. Vorrichtung nach einem der vorhergehenden Ansprüche, wobei der Nadelstrahl (38) eine Strahltaille innerhalb des Probenvolumens oder der Probenhalterung (14) aufweist mit einer Rayleighlänge, die im Wesentlichen gleich oder größer als die halbe Länge des erfassten Abschnitts ist.

5. Vorrichtung nach einem der vorhergehenden Ansprüche, wobei der erfasste Abschnitt den gesamten das Probenvolumen oder die Probenhalterung (14) durchquerenden Nadelstrahl (38) umfasst.

6. Vorrichtung nach einem der vorhergehenden Ansprüche, wobei die Streustrahlung (64; 64') eine durch den Nadelstrahl (38) angeregte Ramanstreustrahlung, vorzugsweise einer Stokes-Ramanstreuung, oder Fluoreszenzstrahlung, vorzugsweise einer nicht-resonanten Fluoreszenz, ist.

7. Vorrichtung nach einem der vorhergehenden Ansprüche, wobei die Lichtquelle (12) ferner dazu ausgebildet ist, den Nadelstrahl (38) im sichtbaren Spektrum, im ultravioletten Spektrum oder im infraroten Spektrum zu erzeugen.

8. Vorrichtung nach einem der vorhergehenden Ansprüche, wobei die Lichtquelle (12) ferner dazu ausgebildet ist, den Nadelstrahl (38) in intensiven Pulsen zur Mehrphotonen-Anregung zu erzeugen.

9. Vorrichtung nach einem der vorhergehenden Ansprüche, wobei die Lichtquelle (12) ferner dazu ausgebildet ist, den Nadelstrahl (38) mit einer begrenzten Bandbreite, vorzugsweise durch monochromatische Laserstrahlung, zu erzeugen.

10. Vorrichtung nach Anspruch 9, wobei die Detektoreinheit (16) ferner dazu ausgebildet ist, die Streustrahlung (64; 64') im Wesentlichen nur bei einer Wellenlänge oder einem Wellenlängenbereich außerhalb der begrenzten Bandbreite zu erfassen.

11. Vorrichtung nach einem der vorhergehenden Ansprüche, wobei die Detektoreinheit einen Signalgeber (86; 86') mit einem Halbleiterdetektor oder einem Photoelektronenvervielfacher aufweist und wobei der Streustrahlungskollektor (66; 266; 366; 366') einen ersten Kollimator (76) umfasst, der zwischen dem Probenvolumen oder der Probenhalterung (14) und dem Signalgeber (86; 86') angeordnet ist.

12. Vorrichtung nach einem der Ansprüche 1 bis 10, ferner umfassend einen ersten Kollimator (576), wobei der erste Kollimator (576) eine dessen optische Achse schneidende Kollimatorausnehmung (556) als Probengefäß (56; 256; 556) aufweist.

13. Vorrichtung nach Anspruch 12, wobei der erste Kollimator (576) einen Reflektor (590) umfasst, vorzugsweise einen Hohlspiegel oder eine Vielzahl Retroreflektoren, der zur Rückstrahlung eines Teils der Streustrahlung (64; 64') in das Probenvolumen oder die Probenhalterung (14) ausgebildet ist.

14. Verfahren (600) zur tomographischen Bilderfassung, umfassend:
- Einstrahlen (602) eines Nadelstrahls (38) mit einer Strahlrichtung (40) in ein zur Aufnahme einer Probe vorgesehenes Probenvolumen einer Probenhalterung (14) zur Anregung von Streustrahlung (64; 64'),
- nicht-ortsaufgelöstes Erfassen (604) der entlang eines Abschnitts des Nadelstrahls (38) angeregten Streustrahlung (64; 64'), wobei die Streustrahlung (64; 64') aus der Strahlrichtung herausgestreute Streustrahlung umfasst, wobei die Streustrahlung (64; 64') integral in einem Raumwinkel um das Probenvolumen oder die Probenhalterung (14) von mindestens 0,12 n sr erfasst wird,
- im Wesentlichen paralleles Versetzen (606) des Nadelstrahls (38) quer zur Strahlrichtung (40) des Nadelstrahls (38) in eine Vielzahl Messstellungen, wobei das Versetzen eine schnelle Rasterungsrichtung und eine langsamen Rasterungsrichtung aufweist,
- Drehen (608) der Probenhalterung (14) in eine Vielzahl Drehstellungen, und
- tomographisches Rekonstruieren (610) eines Bilds auf Grundlage der erfassten Streustrahlung (64; 64').

## Claims

1. Apparatus (10; 210; 310; 410; 510) for tomographic image acquisition, comprising
- a specimen holder (14),
- a light-source (12) which is configured to generate a pencil beam (38) having a beam direction (40) traversing a specimen volume of the specimen holder (14) provided for receiving a specimen, and which exhibits an optical control element (30) that is able to offset the pencil beam (38) traversing the specimen volume of the specimen holder (14) at right angles to the beam direction (40) with substantially unchanged beam direction (40), and
- a detector unit (16) configured for a non-spatially-resolved acquisition of at least a portion of scattered radiation (64; 64') escaping from a section of the pencil beam (38) within the specimen volume of the specimen holder (14), wherein the scattered radiation (64; 64') includes radiation scattered out of the beam direction, **characterized in that** the detector unit (16) exhibits at least one scattered-radiation collector (66; 266; 366; 366') which is configured or which are together configured to acquire the scattered radiation (64; 64') integrally in a solid angle around the specimen volume or the specimen holder (14) of at least 0,12 n sr.

2. Apparatus according to Claim 1, wherein the pencil beam traverses the specimen holder and/or the specimen.

3. Apparatus according to Claim 1 or 2, wherein the specimen holder (14) and the light-source (12) are rotatable relative to one another about an axis of rotation, wherein the beam direction (40) is substantially perpendicular to the axis of rotation.

4. Apparatus according to one of the preceding Claims, wherein the pencil beam (38) exhibits a beam waist within the specimen volume or the specimen holder (14) having a Rayleigh length that is substantially equal to or greater than half the length of the acquired section.

5. Apparatus according to one of the preceding Claims, wherein the acquired section encompasses the entire pencil beam traversing the specimen volume or the specimen holder (14).

6. Apparatus according to one of the preceding Claims, wherein the scattered radiation (64; 64') is a Raman scattered radiation excited by the pencil beam (38), preferentially a Stokes-Raman scattering, or fluorescent radiation, preferentially of a non-resonant fluorescence.

7. Apparatus according to one of the preceding Claims, wherein the light-source (12) is further configured to generate the pencil beam (38) in the visible spectrum, in the ultraviolet spectrum or in the infrared spectrum.

8. Apparatus according to one of the preceding Claims, wherein the light-source (12) is further configured to generate the pencil beam (38) in intense pulses with a view to multi-photon excitation.

9. Apparatus according to one of the preceding Claims, wherein the light-source (12) is further configured to generate the pencil beam (38) with a limited bandwidth, preferentially by monochromatic laser radiation.

10. Apparatus according to Claim 9, wherein the detector unit (16) is further configured to acquire the scattered radiation (64; 64') substantially only at a wavelength or in a wavelength range outside the limited bandwidth.

11. Apparatus according to one of the preceding Claims, wherein the detector unit exhibits a signal generator (86; 86') with a semiconductor detector or with a photomultiplier tube and wherein the scattered-radiation collector (66; 266; 366; 366') includes a first collimator (76) arranged between the specimen volume or the specimen holder (14) and the signal generator (86; 86').

12. Apparatus according to one of Claims 1 to 10, further comprising a first collimator (576), wherein the first collimator (576) exhibits a collimator recess (556) intersecting the optical axis of said collimator by way of specimen vessel (56; 256; 556).

13. Apparatus according to Claim 12, wherein the first collimator (576) includes a reflector (590), preferentially a concave mirror or a plurality of retroreflectors, which is configured for retroreflection of a portion of the scattered radiation (64; 64') into the specimen volume or into the specimen holder (14).

14. Process (600) for tomographic image acquisition, comprising:
- radiating (602) a pencil beam (38) with a beam direction (40) into a specimen volume of a specimen holder (14) provided for receiving a specimen with a view to the excitation of scattered radiation (64; 64'),
- non-spatially-resolved acquiring (604) of the scattered radiation (64; 64') excited along a section of the pencil beam (38), wherein the scattered radiation (64; 64') includes radiation scattered out of the beam direction, wherein the scattered radiation (64; 64') is acquired integrally in a solid angle around the specimen volume or the specimen holder (14) of at least 0,12 n sr,
- substantially parallel offsetting (606) of the pencil beam (38) at right angles to the beam direction (40) of the pencil beam (38) into a plurality of measuring positions, the offsetting exhibiting a fast-rasterisation direction and a slow-rasterisation direction,
- rotating (608) of the specimen holder (14) into a plurality of rotary positions, and
- tomographic reconstructing (610) of an image on the basis of the acquired scattered radiation (64; 64').

## Revendications

1. Dispositif (10 ; 210 ; 310 ; 410 ; 510) pour l'acquisition d'images tomographiques, comprenant
- un support d'échantillon (14),
- une source de lumière (12) conçue pour produire un faisceau étroit (38) avec une direction de faisceau (40) qui traverse un volume d'échantillon du support d'échantillon (14) prévu pour recevoir un échantillon, et comprenant un actionneur optique (30) qui est capable de déplacer le faisceau étroit (38) traversant le volume d'échantillon du support d'échantillon (14) transversalement à la direction de faisceau (40), la direction de faisceau (40) étant sensiblement inchangée, et
- une unité de détection (16) conçue pour détecter de manière non résolue spatialement au moins une partie d'un rayonnement diffusé (64 ; 64') s'échappant d'une partie du faisceau étroit (38) à l'intérieur du volume d'échantillon du support d'échantillon (14), le rayonnement diffusé (64 ; 64') comprenant un rayonnement diffusé émis en dehors de la direction de faisceau,
**caractérisé en ce que** l'unité de détection (16) comprend au moins un collecteur de rayonnement diffusé (66 ; 266 ; 366 ; 366') qui est conçu ou qui ensemble sont conçus pour détecter le rayonnement diffusé (64 ; 64') intégralement dans un angle solide autour du volume d'échantillon ou du support d'échantillon (14) d'au moins 0,12 π sr.

2. Dispositif selon la revendication 1, dans lequel le faisceau étroit traverse le support d'échantillon et/ou l'échantillon.

3. Dispositif selon la revendication 1 ou 2, dans lequel le support d'échantillon (14) et la source de lumière (12) peuvent tourner l'un par rapport à l'autre autour d'un axe de rotation, la direction de faisceau (40) étant sensiblement perpendiculaire à l'axe de rotation.

4. Dispositif selon l'une des revendications précédentes, dans lequel le faisceau étroit (38) présente une taille de faisceau à l'intérieur du volume d'échantillon ou du support d'échantillon (14) ayant une longueur de Rayleigh qui est sensiblement égale ou supérieure à la moitié de la longueur de la partie détectée.

5. Dispositif selon l'une des revendications précédentes, dans lequel la partie détectée comprend l'ensemble du faisceau étroit (38) traversant le volume d'échantillon ou le support d'échantillon (14).

6. Dispositif selon l'une des revendications précédentes, dans lequel le rayonnement diffusé (64 ; 64') est un rayonnement de diffusion Raman, de préférence d'une diffusion Raman Stokes, ou un rayonnement de fluorescence, de préférence d'une fluorescence non résonante, excité par le faisceau étroit (38).

7. Dispositif selon l'une des revendications précédentes, dans lequel la source de lumière (12) est en outre conçue pour produire le faisceau étroit (38) dans le spectre visible, dans le spectre ultraviolet ou dans le spectre infrarouge.

8. Dispositif selon l'une des revendications précédentes, dans lequel la source de lumière (12) est en outre conçue pour produire le faisceau étroit (38) en impulsions intenses pour l'excitation multiphotonique.

9. Dispositif selon l'une des revendications précédentes, dans lequel la source de lumière (12) est en outre conçue pour produire le faisceau étroit (38) avec une largeur de bande limitée, de préférence par rayonnement laser monochromatique.

10. Dispositif selon la revendication 9, dans lequel l'unité de détection (16) est en outre conçue pour détecter le rayonnement diffusé (64 ; 64') sensiblement seulement à une longueur d'onde ou une plage de longueurs d'onde en dehors de la largeur de bande limitée.

11. Dispositif selon l'une des revendications précédentes, dans lequel l'unité de détection présente un générateur de signal (86 ; 86') avec un détecteur à semiconducteur ou un multiplicateur photoélectronique, et dans lequel le collecteur de rayonnement diffusé (66 ; 266 ; 366 ; 366') comprend un premier collimateur (76) disposé entre le volume d'échantillon ou le support d'échantillon (14) et le générateur de signal (86 ; 86').

12. Dispositif selon l'une des revendications 1 à 10, comprenant en outre un premier collimateur (576), le premier collimateur (576) présentant un évidement de collimateur (556) coupant son axe optique comme récipient à échantillon (56 ; 256 ; 556).

13. Dispositif selon la revendication 12, dans lequel le premier collimateur (576) comprend un réflecteur (590), de préférence un miroir concave ou une pluralité de rétroréflecteurs, qui est conçu pour réfléchir une partie du rayonnement diffusé (64 ; 64') dans le volume d'échantillon ou le support d'échantillon (14).

14. Procédé (600) pour l'acquisition d'images tomographiques, comprenant les étapes suivantes :
- irradiation (602) d'un faisceau étroit (38) avec une direction de faisceau (40) dans un volume d'échantillon d'un support d'échantillon (14) prévu pour recevoir un échantillon afin d'exciter un rayonnement diffusé (64 ; 64'),
- détection non résolue spatialement (604) du rayonnement diffusé (64 ; 64') excité le long d'une partie du faisceau étroit (38), le rayonnement diffusé (64 ; 64') comprenant un rayonnement diffusé émis en dehors de la direction de faisceau, le rayonnement diffusé (64 ; 64') étant détecté intégralement dans un angle solide autour du volume d'échantillon ou du support d'échantillon (14) d'au moins 0,12 π sr,
- déplacement sensiblement parallèle (606) du faisceau étroit (38) transversalement à la direction de faisceau (40) du faisceau étroit (38) dans une pluralité de positions de mesure, le déplacement présentant une direction de balayage rapide et une direction de balayage lent,
- rotation (608) du support d'échantillon (14) dans une pluralité de positions de rotation, et
- reconstruction tomographique (610) d'une image sur la base du rayonnement diffusé détecté (64 ; 64').
